# EUROPEAN PATENT APPLICATION

(11) **EP 1 775 977 A1**
(43) Date of publication of application: **18.04.2007**
(21) Application number: 04771281.5
(22) Date of filing: 05.08.2004
(51) Int. Cl.: H04Q 7/36

(54) **BASE STATION, MOBILE COMMUNICATION TERMINAL APPARATUS, AND PRIMARY CELL SELECTING METHOD**

(71) Applicant: MITSUBISHI DENKI KABUSHIKI KAISHA, Chiyoda-ku, Tokyo 100-8310 (JP)
(72) Inventor: WAKABAYASHI, Hideji, Mitsubishi Denki K. K., Tokyo 1008310 (JP)
(74) Representative: Popp, Eugen
(86) International application number: PCT/JP2004/011254
(87) International publication number: WO 2006/013630

(57) **Abstract**

There is a problem that the throughput of a whole system decreases when a base station in which the communication quality of a radio uplink and that of a radio downlink have got out of balance, i.e., a so-called link imbalance has occurred is selected as a primary cell. The present invention is made in order to solve the above-mentioned problem. A base station according to the present invention receives a signal transmitted from a mobile station, estimates the state of the radio uplink, and receives state information indicating the state of the radio downlink measured by the mobile station. When the uplink quality and the downlink quality satisfy scheduling grant conditions set up in advance, the base station is allowed to carry out scheduling for the mobile station. In contrast, the base station is not allowed to carry out the scheduling for any terminal in which a link imbalance has occurred. Therefore, the throughput of the whole system increases.

## Description

### Field of the Invention

The present invention relates to a base station and mobile communication terminal equipment which communicate with each other by means of a W-CDMA (Wideband Code Division Multiple Access) method. More particularly, it relates to a method of determining a primary cell which carries out scheduling for terminals.

### Background of the Invention

In prior art wireless packet communications, as soon as data reaches a terminal, the base station transmits data to the terminal. At that time, carrying out scheduling positively is not taken into consideration in the base station. However, as the terminal transmits data at a higher speed, the power which the terminal uses to transmit data becomes large, and hence the amount of interference in the base station also becomes large. Therefore, there is a necessity to prevent the amount of interference from increasing by controlling transmission by each terminal using a scheduler disposed in the base station, thereby improving the throughput. A base station which takes charge of the scheduling for terminals among a plurality of base stations disposed is called a primary cell or a serving cell.

However, in a communication system using FDD (Frequency Division Duplex), even if the communication quality of an uplink transmission line is good, the communication quality of a downlink transmission line is not necessarily good. Because the terminal cannot receive the response signal (ACK/NACK) transmitted from the base station via the downlink transmission line when the communication quality of the downlink transmission line is bad, the throughput of the whole system decreases. A phenomenon in which the throughput of the whole system thus decreases when the communication quality differs between the uplink transmission line and the downlink transmission line, and communication failures occur between the base station and the terminal is called a link imbalance.

A method of detecting occurrence of a link imbalance is disclosed by patent reference 1, a system for determining the primary cell according to the communication quality of an uplink transmission line is disclosed by patent reference 2, and a system for determining a primary cell on the basis of the communication quality of a downlink transmission line is disclosed by nonpatent reference 1.

[Patent reference 1] Patent application publication No. 2002-527963

Patent reference 1 discloses the method of detecting link imbalance, and a device for detecting occurrence of a link imbalance. However, the method disclosed with patent reference is the one for use in a system called IS-95. Concretely, the method is the one of, by means of a terminal called a maximum access probe, determining whether a link imbalance has occurred in terms of protocols from the number of times that the terminal has tried to make a connection with a base station.

[Patent reference 2] Patent application publication No. 2003-510862

Patent reference 2 discloses that a base station control apparatus selects a predetermined base station in order to carry out downlink packet communications. This base station control apparatus selects a predetermined base station on the basis of the communication quality of an uplink transmission line, such as an SIR (Signal to Interference Ratio) which a base station has measured and which is transmitted to the base station control apparatus. The base station control apparatus disclosed by patent reference 2 does not take into consideration the communication quality of the downlink transmission line when selecting the predetermined base station. While the base station control apparatus disclosed by patent reference 2 selects a predetermined base station on the basis of an SIR transmitted from a base station, there is a problem that the base station control apparatus cannot select any appropriate base station in an environment where the communication quality of the uplink transmission line varies greatly because it takes much time to transmit the SIR from the base station to the base station control apparatus.

[Nonpatent reference 1] 3GPP RAN1 document R1-040492

Nonpatent reference 1 suggests a terminal which determines a primary cell for scheduling. Concretely, nonpatent reference 1 shows that the terminal determines a primary cell on the basis of a path loss and an uplink load.

### Disclosure of the Invention

### Problems to be Solved by the Invention

In prior art downlink packet communications, a terminal determines a primary cell from the quality of a downlink transmission line. However, because the terminal does not take occurrence of a link imbalance into consideration when determining a primary cell, the base station sends out ACK/NACK to the mobile station using excessive downlink transmission power in a case in which the quality of the uplink transmission line from the terminal to the base station is not good. A main object of the present invention is to provide a base station and mobile communication terminal equipment which improve the throughput of the whole system by determining a primary cell by especially taking a link imbalance into consideration. Furthermore, even when a link imbalance has occurred, by changing the determination of the primary cell and the selection of an HARQ method, the communication quality of the uplink transmission line can be secured, the downlink power needed for transmission of ACK/NACK can be suppressed, and the throughput can be further improved.

### Means for Solving the Problems

The present invention is made in order to solve the above-mentioned problem, and it is therefore an object of the present invention to improve the throughput by performing determination of a primary cell which avoids occurrence of a link imbalance and selection of an appropriate hybrid ARQ method of securing the qualities of links according to the number of the links and their qualities. It is a further object of the present invention to provide a terminal, a base station and a base station control apparatus which implement the above-mentioned improvement, and a mobile communication system using the terminal, base station and base station control apparatus.

In accordance with the present invention, there is provided a base station which performs a scheduling process of allocating a radio resource to a mobile station according to a radio resource allocation request for allocation of the radio resource which is transmitted from the mobile station via a radio uplink, and which notifies a result of this scheduling process to the mobile station via a radio downlink, the base station including: a radio uplink state estimation unit for receiving a signal transmitted from the mobile station to estimate a state of the radio uplink; a radio downlink state information receiving unit for receiving state information indicating a state of the radio downlink measured by the mobile station; and a scheduling grant judgment unit for permitting the base station to carry out scheduling for the mobile station when this radio downlink state information receiving unit has received the state information and the state of the radio uplink which the radio uplink state estimation unit has estimated satisfies a predetermined scheduling grant condition.

In accordance with the present invention, there is provided mobile communication terminal equipment which notifies a scheduling request signal for making a request for allocation of a radio resource to a base station via an uplink transmission line when carrying out data transmission, and which carries out transmission of data to the base station according to a scheduling result obtained by the base station notified via a downlink transmission line, the terminal equipment including: a radio downlink state estimation unit for receiving a signal transmitted from at least the base station to estimate a state of the radio downlink; a radio uplink state information receiving unit for receiving state information indicating a state of the radio uplink measured by at least the base station; a cell selecting unit for selecting the base station from which the radio uplink state information receiving unit had received the state information, and for which the state of the radio downlink satisfies a predetermined condition; and a transmitting unit for transmitting the scheduling request signal to the base station selected by the cell selecting unit.

In accordance with the present invention, there is provided a primary cell determination method including: a radio uplink state estimation step of receiving a signal transmitted from a mobile station to estimate a state of a radio uplink from the mobile station to a base station; a radio downlink state information transmission step of receiving a signal transmitted from the base station, and for transmitting state information indicating a state of a radio downlink from the base station to the mobile station from the mobile station to the base station; a scheduling grant judgment step of determining whether the state information on the state of the radio downlink transmitted in the radio downlink state information transmission step and the state of the radio uplink estimated in the radio uplink state estimation step satisfy a predetermined scheduling grant condition, and of, when the schedule grant condition is satisfied, permitting a scheduling process of allocating a radio resource to the mobile station; a scheduling result notification step of carrying out scheduling for the mobile station for which the scheduling process is permitted in the scheduling grant judgment step, and of notifying a scheduling result to the mobile station; and a data transmission step of the mobile station which has received the scheduling result determining, as a primary cell, the base station and transmitting data to the base station.

In accordance with the present invention, there is provided a primary cell determination method including: a radio downlink state estimation step of receiving a signal transmitted from a base station to estimate a state of a radio downlink from the base station to a mobile station; a radio uplink state information transmission step of receiving a signal transmitted from the mobile station, and transmitting state information indicating a state of a radio uplink from the mobile station to the base station from the base station to the mobile station; a cell selecting step of selecting the base station which is associated with the state information on the state of the radio uplink transmitted in the radio uplink state information transmission step, and for which the state of the radio downlink estimated in the radio downlink state estimation step satisfies a predetermined condition; a transmission step of transmitting a scheduling request signal to the base station selected in the cell selecting step; and a data transmission step of the mobile station which has received a scheduling result determining, as a primary cell, the base station, and transmitting data to the base station.

### Advantages of the Invention

Because the base station in accordance with the present invention, which performs a scheduling process of allocating a radio resource to a mobile station according to a radio resource allocation request for allocation of the radio resource which is transmitted from the mobile station via a radio uplink, and which notifies a result of this scheduling process to the mobile station via a radio downlink, includes the radio uplink state estimation unit for receiving a signal transmitted from the mobile station to estimate a state of the radio uplink, the radio downlink state information receiving unit for receiving state information indicating a state of the radio downlink measured by the mobile station; and the scheduling grant judgment unit for permitting the base station to carry out scheduling for the mobile station when this radio downlink state information receiving unit has received the state information and the state of the radio uplink which the radio uplink state estimation unit has estimated satisfies a predetermined scheduling grant condition, the base station can select a mobile station which is a target for scheduling appropriately in consideration of occurrence of a link imbalance.

Because the mobile communication terminal equipment in accordance with the present invention, which notifies a scheduling request signal for making a request for allocation of a radio resource to a base station via an uplink transmission line when carrying out data transmission, and which carries out transmission of data to the base station according to a scheduling result obtained by the base station notified via a downlink transmission line, includes the radio downlink state estimation unit for receiving a signal transmitted from at least the base station to estimate a state of the radio downlink, the radio uplink state information receiving unit for receiving state information indicating a state of the radio uplink measured by at least the base station, the cell selecting unit for selecting the base station from which the radio uplink state information receiving unit had received the state information, and for which the state of the radio downlink satisfies a predetermined condition, and the transmitting unit for transmitting the scheduling request signal to the base station selected by the cell selecting unit, the mobile communication terminal equipment can select a primary cell appropriately in consideration of occurrence of a link imbalance.

Because in the primary cell determination method in accordance with the present invention, the radio uplink state estimation step of receiving a signal transmitted from a mobile station to estimate a state of a radio uplink from the mobile station to a base station, the radio downlink state information transmission step of receiving a signal transmitted from the base station, and for transmitting state information indicating a state of a radio downlink from the base station to the mobile station from the mobile station to the base station, the scheduling grant judgment step of determining whether the state information on the state of the radio downlink transmitted in the radio downlink state information transmission step and the state of the radio uplink estimated in the radio uplink state estimation step satisfy a predetermined scheduling grant condition, and of, when the schedule grant condition is satisfied, permitting a scheduling process of allocating a radio resource to the mobile station, the scheduling result notification step of carrying out scheduling for the mobile station for which the scheduling process is permitted in the scheduling grant judgment step, and of notifying a scheduling result to the mobile station, and the data transmission step of the mobile station which has received the scheduling result determining, as a primary cell, the base station and transmitting data to the base station are carried out, a primary cell can be selected appropriately in consideration of occurrence of a link imbalance.

Because in the primary cell determination method in accordance with the present invention, the radio downlink state estimation step of receiving a signal transmitted from a base station to estimate a state of a radio downlink from the base station to a mobile station, the radio uplink state information transmission step of receiving a signal transmitted from the mobile station, and transmitting state information indicating a state of a radio uplink from the mobile station to the base station from the base station to the mobile station, the cell selecting step of selecting the base station which is associated with the state information on the state of the radio uplink transmitted in the radio uplink state information transmission step, and for which the state of the radio downlink estimated in the radio downlink state estimation step satisfies a predetermined condition, the transmission step of transmitting a scheduling request signal to the base station selected in the cell selecting step, and the data transmission step of the mobile station which has received a scheduling result determining, as a primary cell, the base station, and transmitting data to the base station are carried out, a mobile station which is a target for scheduling can be selected appropriately in consideration of occurrence of a link imbalance.

### Brief Description of the Figures

[Fig. 1] Fig. 1 is an explanatory diagram showing the structure of a communication system;
[Fig. 2] Fig. 2 is an explanatory diagram of channels which connect a base station with a terminal;
[Fig. 3] Fig. 3 is a block diagram showing the structure of a base station according to embodiment 1 of the present invention;
[Fig. 4] Fig. 4 is an explanatory diagram showing a state in which a terminal is connected, via radio, to one primary cell;
[Fig. 5] Fig. 5 is an explanatory diagram showing a state in which a terminal is connected, via radio, to one or more primary cells;
[Fig. 6] Fig. 6 is a block diagram showing the structure of mobile communication terminal equipment which communicates with the base station shown in Fig. 3;
[Fig. 7] Fig. 7 is an explanatory diagram showing the status of a communication system in which a link imbalance has occurred;
[Fig. 8] Fig. 8 is a flow chart for explaining a primary cell determination process in consideration of uplink and downlink qualities which is carried out by the base station according to embodiment 1 of the present invention;
[Fig. 9] Fig. 9 is a flow chart for explaining a variant of the primary cell determination process in consideration of uplink and downlink qualities which is carried out by the base station according to embodiment 1 of the present invention;
[Fig. 10] Fig. 10 is a flow chart for explaining a process determining a selection penalty coefficient which is carried out by the terminal;
[Fig. 11] Fig. 11 is a diagram showing the format of a signal which the terminal transmits to the base station to notify the selection penalty coefficient to the base station;
[Fig. 12] Fig. 12 is an explanatory diagram showing an example of comparison between a case in which the primary cell is selected without using the selection penalty coefficient and a case in which the primary cell is selected using the selection penalty coefficient;
[Fig. 13] Fig. 13 is a flow chart for explaining a primary cell determination process of adjusting a threshold in the base station according to the communication quality of a downlink transmission line;
[Fig. 14] Fig. 14 is a diagram showing the format of a signal which is used to notify the threshold to the base station;
[Fig. 15] Fig. 15 is a block diagram showing the structure of a terminal according to embodiment 2 of the present invention;
[Fig. 16] Fig. 16 is a block diagram showing the structure of a base station which communicates with the mobile communication terminal equipment shown in Fig. 15;
[Fig. 17] Fig. 17 is a flow chart showing a primary cell determination process which is carried out by the mobile communication terminal equipment according to embodiment 2 of the present invention;
[Fig. 18] Fig. 18 is a flow chart for explaining a variant of the primary cell determination process in consideration of uplink and downlink qualities which is carried out by the mobile communication terminal according to embodiment 2 of the present invention;
[Fig. 19] Fig. 19 is a flow chart for explaining a process of determining a selection penalty coefficient which is carried out by the base station;
[Fig. 20] Fig. 20 is a diagram showing the formats of signals which are used to transmit the selection penalty coefficient and a threshold increase/decrease instruction to the terminal;
[Fig. 21] Fig. 21 is a flow chart for explaining a variant of the primary cell determination process in consideration of uplink and downlink qualities which is carried out by the mobile communication terminal according to embodiment 2 of the present invention;
[Fig. 22] Fig. 22 is an explanatory diagram for explaining the characteristics of Chase Combining and IR;
[Fig. 23] Fig. 23 is an explanatory diagram explaining a state in which the terminal is placed in an SHO state in which the terminal communicates with two or more base stations, and is carrying out macro selective combining;
[Fig. 24] Fig. 24 is a block diagram showing the structure of mobile communication terminal equipment according to embodiment 3 of the present invention;
[Fig. 25] Fig. 25 is an explanatory diagram showing a case which the communication quality of a certain one of two or more cells can be allowed to stand out from those of the other cells;
[Fig. 26] Fig. 26 is an explanatory diagram showing the format of a signal which the terminal transmits in order to notify an HARQ method;
[Fig. 27] Fig. 27 is an explanatory diagram explaining a state in which the terminal is placed in an SHO state in which the terminal communicates with two or more base stations, and the communication quality of each link is bad;
[Fig. 28] Fig. 28 is a flow chart for explaining a process of changing the HARQ method from macro selective combining mode to IR mode which is carried out by the terminal;
[Fig. 29] Fig. 29 is an explanatory diagram showing the format of a signal which the terminal transmits to the base station to notify the base station that the terminal uses the IR mode;
[Fig. 30] Fig. 30 is a flow chart showing a process of determining a primary cell on the basis of the communication quality of an uplink transmission line which is carried out by the base station; and
[Fig. 31] Fig. 31 is an explanatory diagram showing the format of a signal which the terminal transmits to the base station to notify the communication quality of the downlink transmission line to the base station.

### Explanation of reference numerals

100: Terminal, 101: Base station, 102: Base station control apparatus,
311: Transmit buffer, 312: Scheduling request information generating unit,
313: E-DPCCH transmitting unit, 314: Scheduling receiving unit,
315: Transmission grant control unit, 316: E-DCH transmitting unit, 317: Response signal receiving unit,
318: Retransmission control unit, 319: Primary cell determination unit,
320: CPICH receive level information transmitting unit, 412: E-DPCCH receiving unit, 413: Scheduling request information receiving unit,
414: Uplink scheduler, 415: Scheduling information signaling unit,
420: Load notifying unit, 421: Schedule grant judgment unit,
422: CPICH level receiving unit, 423: Primary cell determination instruction receiving unit,
424: Threshold receiving unit.

### Preferred Embodiments of the Invention

### Embodiment 1.

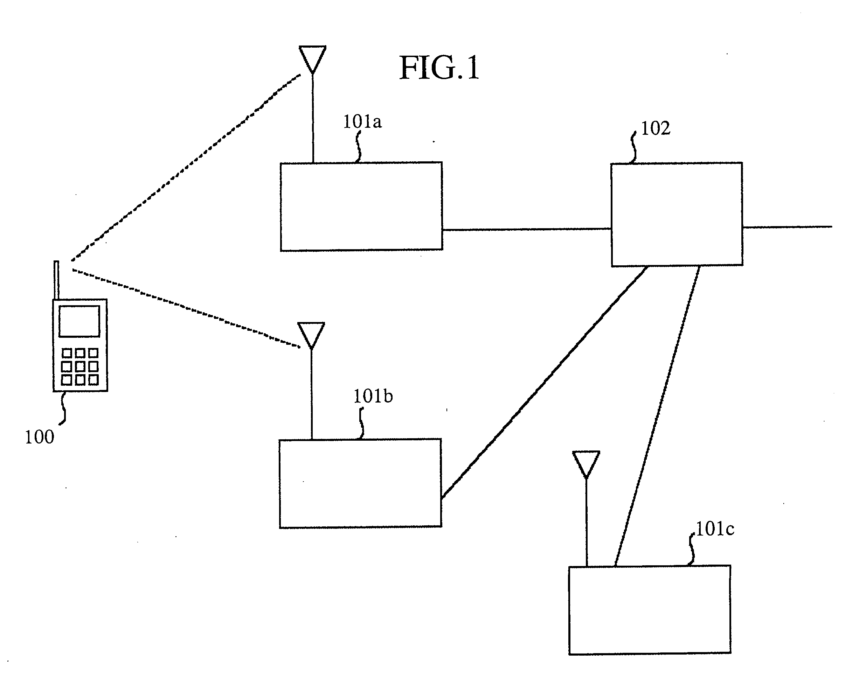

Fig. 1 is an explanatory diagram showing the structure of a packet communication system. A terminal 100 is a device which the user uses. The terminal 100 communicates with one or more of a plurality of base stations 101a, 101b, and 101c by radio. The base stations 101a, 101b, and 101c are connected to a network (i.e., a public network or the like) via a base station control apparatus 102. By using such a system configuration, the terminal 100 can carry out processing which is called a software handover (Soft Hand Over, which is referred to as SHO from here on) of holding a radio link with two or more base stations. In a W-CDMA system, the terminal 100 is referred to as UE (User Equipment), each base station 101 is referred to as Node-B, and the base station control apparatus 102 is referred to as RNC (Radio Network Controller). In a system in which high-speed uplink packet communications are carried out, a specific base station may take charge of scheduling for terminals. There are cases in which such a base station which takes charge of scheduling for terminals is referred to as a primary cell or serving cell. A technical term "cell" is also used as an alias of a base station.

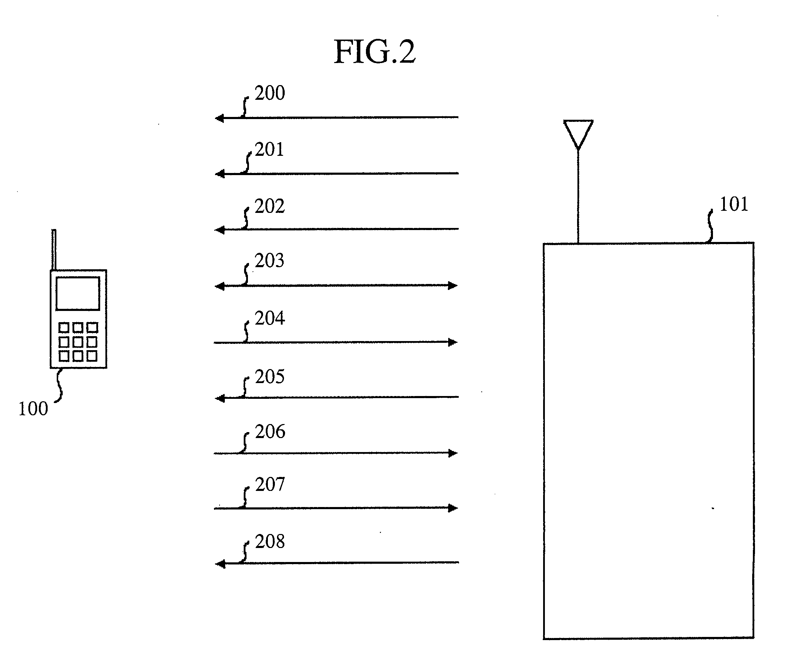

Fig. 2 is an explanatory diagram showing the configuration of channels for use in the packet communication system. Hereafter, the configuration of channels in a wireless section between a terminal 100 and a base station 101 in the W-CDMA system will be explained as an example. Each channel's name is a tentative name and can be changed from now on. Furthermore, there is a possibility that when the channels are actually used, one channel can be shared as two or more control channels. Hereafter, downlink channels extending from the base station to the terminal will be explained with reference to Fig. 2. The downlink channels includes a CPICH (Common Pilot Channel) 200 which is used to notify reference of all timings to the whole cell, and a P-CCPCH (Primary-Common Control Physical Channel) 201 which is used to notify broadcast information to each terminal. Furthermore, there is an S-CCPCH (Secondary-Common Control Physical Channel) 202 as a channel which is used to piggyback a downlink common channel thereonto. The downlink channels further include, as what is used for uplink packet communications, a DL-E-DPCCH (Downlink Enhancement-Dedicated Physical Control Channel) 205 which is used to transmit control information for notifying allocation positions determined by a scheduler and an ACK/NACK (Ack/Nack Channel) 208 which is used to notify success/failure of reception by the base station. The DL-E-DPCCH 205 and ACK/NACK 208 are not necessarily independent channels, but can be piggybacked onto another channel.

Uplink channels extending from the terminal to the base station will be explained with reference to Fig. 2. As uplink channels via which uplink packet communications are carried out, there exist a UL-E-DPCCH (UPLINK Enhancements-Dedicated Physical Control Channel) 204 which is used to transmit control information for notifying the state of the terminal, such as existence of transmission data in the terminal, to the scheduler of the base station, and a E-DCH (Enhanced Uplink Dedicated Channel) 207 which is used to transmit the data body of uplink packets. A E-TFCI 206 is used to notify the transport format of data which is transmitted from the terminal 100 to the base station 101 via the E-DCH 207. The base station 101 carries out demodulation on the basis of the transport format of the data associated with the E-DCH 207, which is transmitted from the terminal 100 via the E-TFCI 206. This E-TFCI 206 can be an independent channel, or can be alternatively piggybacked onto the UL-E-DPCCH 204. As an alternative, the E-TFCI 206 can be piggybacked onto a conventional DPCCH.

As a channel which serves as both an uplink channel and a downlink channel, there is a DPCH (Dedicated Physical channel) 203 which is independently set up for communications with a specific terminal. This DPCH is set up as both an uplink channel and a downlink channel, and is used for communications of sound, data, etc., and for signaling of an upper layer. The DPCH 203 can be divided into a DPCCH (Dedicated Physical Control channel) which is used to transmit a bit about data and a DPDCH (Dedicated Physical Data channel) which is used to transmit a bit about control, and can be treated as a physical channel.

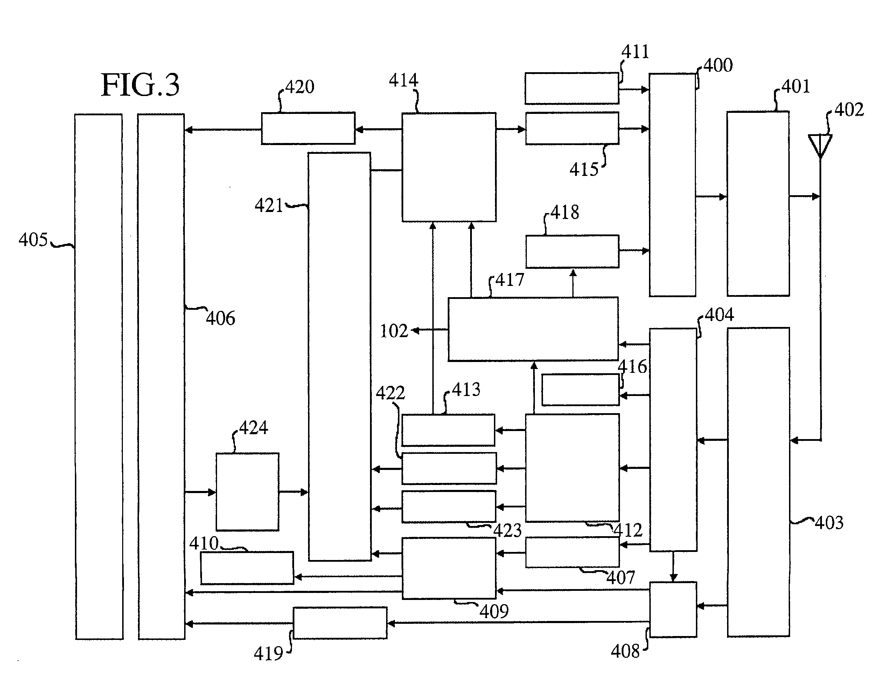

Fig. 3 is a block diagram showing the structure of each base station according to embodiment 1 of the present invention. In Fig. 3, a modulating unit 400 multiplexes signals associated with channels into a signal, and performs a diffusion process on this signal to modulate it into a desired carrier. A power amplifying unit 401 amplifies the signal outputted from the modulating unit 400 so that it has a desired transmission power. The signal amplified by the power amplifying unit 401 is transmitted to mobile communication terminal equipment (referred to as a terminal from here on) via an antenna 402. The antenna 402 receives an electric wave transmitted from a terminal. The reception signal received by the antenna 402 is amplified by a low noise amplifier unit 403 so that it has a level which is needed for demodulation processing. A demodulating unit 404 performs a back diffusion process on the signal which has been transmitted from a terminal and which is received by the base station using the same code as that used for the diffusion process carried out by the terminal so as to demultiplex it into original signals associated with the channels.

Each base station shown in Fig. 3 is provided with, as structural components needed for communications via a dedicated channel, a control unit 405 and a protocol processing unit 406. Each base station shown in Fig. 3 is further provided with a DPCH receiving unit 407, an interference amount measuring unit 408, an SIR calculating unit 409, a TPC command generating unit 410, and a DPCH transmitting unit 411 in order to control individually the transmission power of each terminal which exists in the cell which each base station manages. The DPCH receiving unit 407, interference amount measuring unit 408, and SIR calculating unit 409 are a radio uplink state estimation unit which receives a signal transmitted from a mobile station so as to estimate the state of the radio uplink extending from the mobile station. The control unit 405 controls delivery of data, timing, etc. The protocol processing unit 406 processes communication protocols while processing communications between the base station control apparatus and each base station. The DPCH receiving unit 407 extracts data associated with the DPCCH demultiplexed through the demodulation processing by the demodulating unit 404, and outputs the data to the interference amount measuring unit 408. The interference amount measuring unit 408 removes a receiving intensity from the low noise amplifier unit 403 and a known code signal from the demodulating unit 404 from the data, measures the amount of interference, and outputs the measurement result to an interference amount informing unit 419 and the SIR calculating unit 409.

The interference amount informing unit 419 notifies the amount of interference which the interference amount measuring unit 408 has measured to the base station control apparatus via the protocol processing unit 406. On the other hand, the SIR calculating unit 409 calculates a ratio (SIR: Signal to Interference Ratio) between the signal and the interference from the amount of interference which the interference amount measuring unit 408 has measured. The SIR calculating unit 409 outputs the calculated SIR to the TPC command generating unit 410. The TPC command generating unit 410 compares a target SIR value which is specified by the base station control apparatus with the current SIR value which is calculated by the SIR calculating unit 409. When the current SIR value is smaller than the target SIR value, the TPC command generating unit 410 generates a TPC (Transmission Power Control) instruction to instruct the terminal to increase its transmission power. In contrast, when the current SIR value is larger than the target SIR value, the TPC command generating unit 410 generates a TPC command to instruct the terminal to decrease its transmission power. The DPCH transmitting unit 411 inserts the TPC command which the TPC command generating unit 410 has generated into DPCCH, and outputs it to the modulating unit 400 in order to transmit the TPC command to the terminal.

Each base station shown in Fig. 3 is also provided with, as structural components needed for scheduling, a E-DPCCH receiving unit 412, a scheduling request information receiving unit 413, an uplink scheduler 414, and a scheduling information signaling unit 415. In Fig. 3, the E-DPCCH receiving unit 412 decodes the scheduling request information included in the data associated with the E-DPCCH into which the demodulating unit 404 has demodulated and demultiplexed the signal transmitted from the terminal in order to acquire the scheduling request information transmitted from the terminal. The decoded scheduling request information is extracted by the scheduling request information receiving unit 413, and is inputted to the uplink scheduler 414. The uplink scheduler 414 carries out scheduling in response to the scheduling request information transmitted from the terminal.

Hereafter, the scheduling processing will be explained. The scheduling processing is a radio resource control process of allocating a radio resource, such as a transmission timing, to each terminal according to the scheduling request notified from the terminal, which can be carried out by each base station. Each base station controls radio resources so that the increase in the transmission power of each terminal falls within a transmission power margin range so as to maximize the throughput of the whole cell when each terminal reflects the scheduling result. When making a scheduling request, the terminal transmits the scheduling request including information including the amount of transmission packet data, etc., to a base station. The base station performs a process (or a scheduling process) of allocating a radio resource to the terminal on the basis of the quality of the transmission line, the margin of the transmission power of the terminal, etc. , and notifies the scheduling result to the terminal by way of a channel for downlinks. According to the scheduling result transmitted from the base station, the terminal piggybacks packet data onto a channel for data transmission to transmit them to the base station. The base station transmits result information (ACK/NACK) indicating a result of judgment of reception of the packet data transmitted from the terminal to the terminal. Thus, by carrying out control of the radio resource which the base station allocates to the terminal, i.e. , the scheduling process, the base station can appropriately control the amount of interference in the base station which presents a problem in the uplink transmission, and can therefore economize on the radio resource while implementing high speed communications.

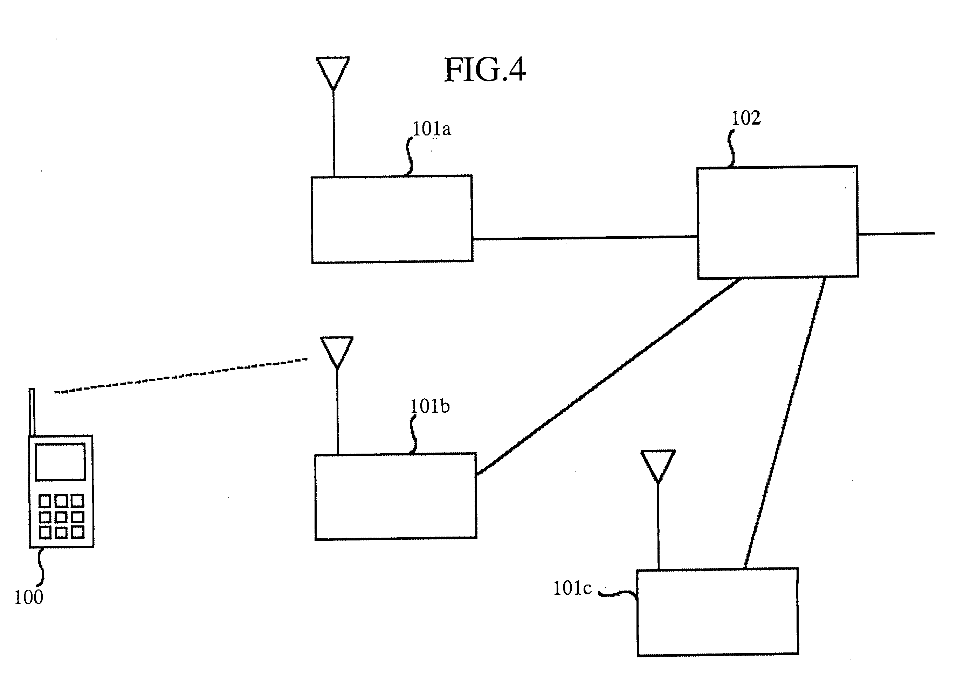

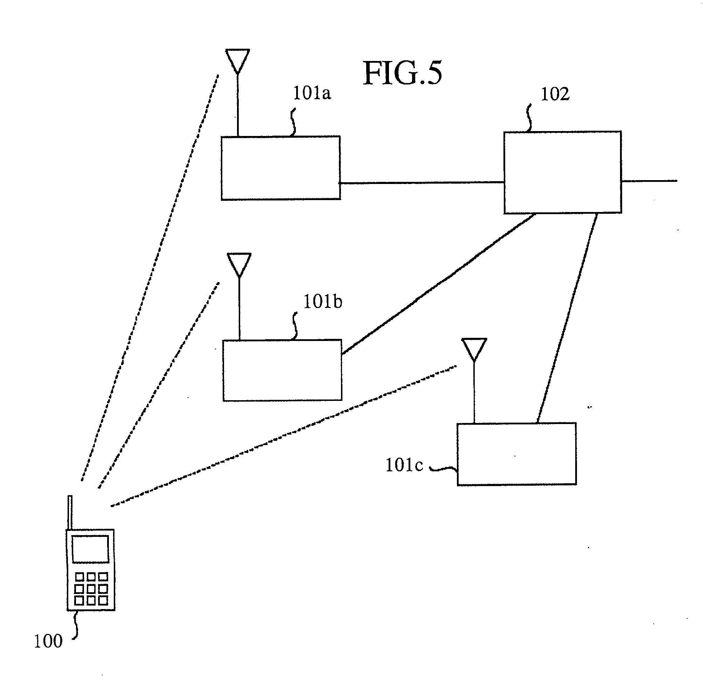

There are two kinds of methods of operating the scheduler in an SHO state which two or more base stations are simultaneously connected to one terminal. In a case in which the terminal 100 and the base station 101b (scheduler) which carries out the scheduling have a one-to-one relation, as shown in Fig. 4, the signaling and control are simple. In this case, when the communication quality of the transmission line between the terminal 100 and the base station 101b which carries out the scheduling degrades, it takes much time to shift the scheduler to another base station (for example, the base station 101a or 101c). In contrast, in a case in which the terminal 100 and the base stations 101a to 101c (schedulers) which carry out the scheduling have a one-to-many relation, as shown in Fig. 5, the signaling and control become complicated because the terminal uses the two or more schedulers simultaneously. In this case, even if the communication quality of one transmission line between the terminal 100 and either one of the base stations 101a, 101b, and 101c which carry out the scheduling degrades, the terminal can continue communications using the scheduler of one of the base stations which corresponds to a transmission line having a good communication quality. In a case in which the terminal uses two or more base stations simultaneously, the terminal can issue a scheduling request to either one of the two or more base stations according to the communication qualities of the transmission lines between the terminal and the two or more base stations. In this case, although two or more base stations which can carry out the scheduling exist for the terminal, the terminal can assume that a base station which carries out the scheduling at a certain time for the terminal is a primary cell.

The uplink scheduler 414 disposed in each base station shown in Fig. 3 carries out the scheduling processing according to the scheduling request transmitted from the terminal, and outputs the scheduling result to the scheduling information signaling unit 415. The scheduling information signaling unit 415 transmits the scheduling result to each terminal which has transmitted a scheduling request to the base station. A E-TFCI receiving unit 416 receives a transport format, HARQ information, etc. An HARQ receiving processing unit 417 receives data associated with the E-DCH containing transmission packet data which each terminal has transmitted to the base station according to the scheduling result transmitted from the base station. When the HARQ receiving processing unit 417 has received the transmission packet data transmitted from each terminal properly, the response signal transmitting unit 418 outputs an ACK signal to the modulating unit 400 in order to transmit the ACK signal to each terminal. In contrast, when the HARQ receiving processing unit has not received any transmission packet data transmitted from each terminal properly, the response signal transmitting unit 418 outputs a NACK signal to the modulating unit 400 in order to transmit the ACK signal to each terminal. When the HARQ receiving processing unit has not received the transmission packet data transmitted from each terminal properly, the uplink scheduler 414 carries out a retransmission process of making each terminal transmit the packet data to the base station again. The interference amount informing unit 419 notifies the amount of interference measured by the base station to the base station control apparatus.

Each base station according to embodiment 1 of the present invention shown in Fig. 3 is also provided with, as structural components which each base station needs in order to judge whether or not each base station itself is a primary cell of a certain terminal, a load notifying unit 420, a schedule grant judgment unit 421, a CPICH level receiving unit 422, a primary cell determination instruction receiving unit 423, and a threshold receiving unit 424. The schedule grant judgment unit 421 judges whether each base station takes charge of the scheduling using a scheduling grant condition, such as a threshold which is set up in advance. The CPICH level information receiving unit 422 is a radio downlink state information receiving unit which receives, as state information indicating the state of the radio downlink, a CPICH receive level measured by a mobile station. The primary cell determination instructing receiving unit 423 of each base station receives an instruction for designating, as the primary cell, each base station which is transmitted from a terminal. The load informing unit 420 acquires information about the operation conditions of the uplink scheduler 414, and notifies information about the load condition to the base station control apparatus via the protocol processing unit 406. The primary cell determination instructing receiving unit 423 can adopt any of two methods of designating each base station as the primary cell.

The first method is the one with which the terminal provides information indicating whether or not the cell of each base station is a primary cell to each base station. In a base station to which information indicating that the cell of the base station is a primary cell is provided, the schedule grant judgment unit 421 grants the scheduling for the terminal and makes the scheduler 414 operate. Because the method of providing information indicating that the cell of each base station 101 is a primary cell to each base station 101 to make each base station carry out the scheduling by means of the terminal 100 does not need the mediation of the base station control apparatus, it can omit the signaling between each base station and the base station control apparatus and has an advantage of being able to reduce the processing time. The second method is the one of notifying candidate cells which can become the primary cell of a certain terminal to the base station control apparatus via a base station so as to allow the base station control apparatus to select, as the primary cell, a candidate cell. This method has an advantage of being able to carry out the signaling of the primary cell in bulk at a time. Instead of the terminal, a base station can determine the primary cell. In this case, the terminal provides only information specifying primary cell candidates to the base station so that the base station determines the primary cell finally from the primary cell candidates.

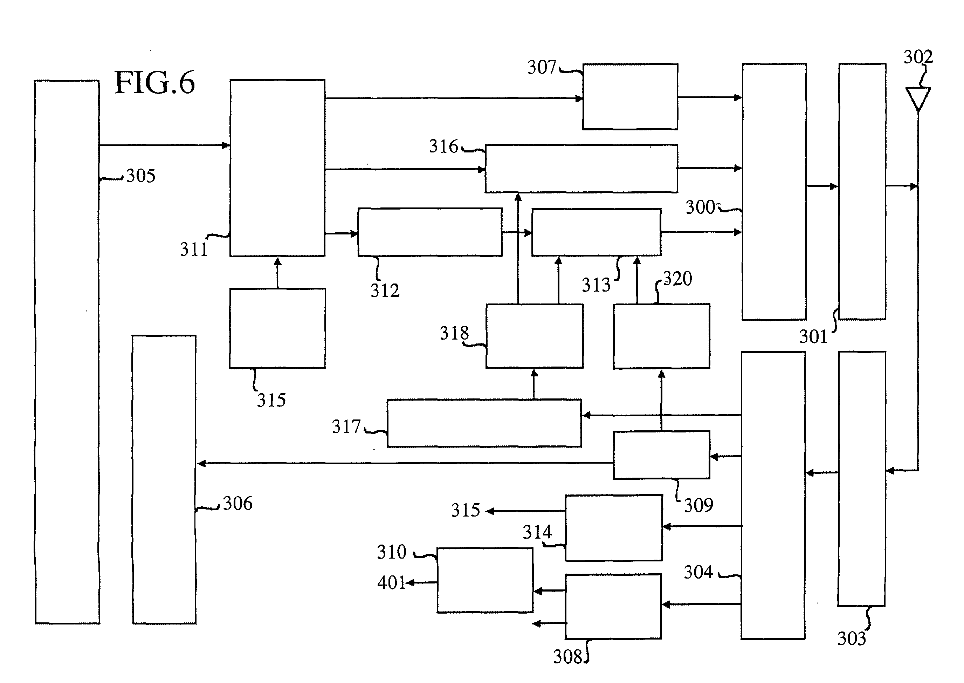

Fig. 6 is a block diagram showing the structure of mobile communication terminal equipment which communicates with a base station as shown in Fig. 3. In Fig. 6, a modulating unit 300 multiplexes signals associated with channels into a signal, and performs a diffusion process on this signal using a predetermined spread code, and further modulates it with a desired carrier. A power amplifying unit 301 amplifies the signal outputted from the modulating unit 300 so that it has a desired power. The signal amplified by the power amplifying unit 301 is transmitted to the base station via an antenna 302. The antenna 302 receives an electric wave transmitted from the base station. The receive signal received by the antenna 302 is amplified by a low noise amplifier unit 303 so that it has a level needed for demodulation processing. A demodulating unit 304 performs a back diffusion process on the receive signal amplified by the low noise amplifier unit 303, and demultiplexes it into original signals associated with the channels.

The mobile communication terminal equipment shown in Fig. 6 is also provided with, as structural components needed for communications via a dedicated channel, a control unit 305, a protocol processing unit 306, a DPCH transmitting unit 307, a DPCH receiving unit 308, and a CPICH receiving unit 309. The CPICH receiving unit 309 is a radio downlink state estimation unit for estimating the state of the radio downlink. The control unit 305 controls delivery of data, timing, etc. The protocol processing unit 306 processes communication protocols. The DPCH transmitting unit 307 and DPCH receiving unit 308 transmit and receive signals according to protocols. The CPICH receiving unit 309 receives a signal associated with a common pilot channel, and delivers information about the level of the received signal associated with the common pilot channel to the protocol processing unit 306. The protocol processing unit 306 notifies candidates for a cell to which a software handover is to be performed via a dedicated channel to the base station control apparatus on the basis of the receive level of the signal associated with the common pilot channel transmitted from the CPICH receiving unit 309. The mobile communication terminal equipment shown in Fig. 6 is also provided with a TPC command receiving unit 310 as a structural component needed for transmission power control. The TPC command receiving unit 310 extracts data associated with DPCCH in which control information from the DPCH receiving unit 308 is included and obtains a TPC command from the data. The TPC command receiving unit then controls a transmission power amplification process which the power amplifying unit 301 carries out according to the TPC command. The TPC command is the one with which the base station instructs the terminal to increase or decrease the transmission power of the terminal.

The mobile communication terminal equipment shown in Fig. 6 is also provided with, as structural components needed for making a request for scheduling of the base station, a transmit buffer 311, a scheduling request information generating unit 312, a E-DPCCH transmitting unit 313, scheduling receiving unit 314, a transmission grant control unit 315, a E-DCH transmitting unit 316, a response signal receiving unit 317, a retransmission control unit 318, and a CPICH receive level information transmitting unit 320. User data are inputted to the transmit buffer 311 from the control unit 305. The scheduling request information generating unit 312 generates scheduling request information on the basis of the user data inputted to the transmit buffer 311. The E-DPCCH transmitting unit 313 encodes the scheduling request information which the scheduling request information generating unit 312 has generated into coded data in the form which can be transmitted, and outputs the coded data to the modulating unit 300. As explained previously, the modulating unit 300 modulates the data associated with the various transmission physical channels (DPDCH, DPCCH, and E-DPCCH) inputted thereto using a known technique, and outputs them to the power amplifying unit 301 as a transmission baseband signal. The power amplifying unit 301 converts the inputted transmission baseband signal into a radio frequency signal, and transmits it to the base station via the antenna 302.

The base station which has received the scheduling request information from the terminal carries out the scheduling. The base station then transmits the scheduling result to the terminal. As structural components needed for carrying out data transmission on the basis of the scheduling result transmitted from the base station, the mobile communication terminal equipment shown in Fig. 6 is provided with a scheduling receiving unit 314, a transmission grant control unit 315, and a E-DCH transmitting unit 316. The scheduling receiving unit 314 receives the instruction from the scheduler of the base station, i.e., the scheduling result. The transmission grant control unit 315 makes the transmit buffer 311 output the transmission data according to the scheduling result transmitted from the base station which the scheduling receiving unit 314 has received. The E-DCH transmitting unit 316 encodes the transmission data outputted from the transmit buffer 311 into coded data in the form which can be transmitted via the E-DCH, and outputs them to the modulating unit 300. When receiving the transmission data transmitted from the terminal normally, the base station transmits an ACK signal to the terminal. In contrast, when the base station has not received the transmission data transmitted from the terminal normally, the base station transmits a NACK signal to the terminal.

The terminal can recognize whether the data which it has transmitted to the base station have been certainly transmitted to the base station from the ACK/NACK signal transmitted from the base station. When receiving the ACK signal from the base station, the terminal selects new packet data to be transmitted to the base station for the next time. In contrast, when receiving the NACK signal from the base station, the terminal retransmits the transmission data according to an HARQ (hybrid ARQ) mode. Because the data retransmission processing according to the HARQ mode will be mentioned below, the explanation of the data retransmission processing is omitted in this embodiment. As structural components needed for carrying out new data transmission or data retransmission in response to the ACK/NACK signal transmitted from the base station, the mobile communication terminal equipment shown in Fig. 6 is provided with a response signal receiving unit 317 and a retransmission control unit 318. The ACK/NACK signal transmitted from the base station is demodulated by the low noise amplifier unit 303 and demodulating unit 304, and the demodulated ACK/NACK signal is inputted to the response signal receiving unit 317. The response signal receiving unit 317 recognizes the ACK/NACK signal included in the received signal which has been demodulated, and outputs the recognized ACK/NACK signal to the retransmission control unit 318. The retransmission control unit 318 selects new packet data to be transmitted for the next time when the signal transmitted from the base station is an ACK signal, whereas when the signal transmitted from the base station is a NACK signal, the retransmission control unit carries out retransmission processing according to the HARQ mode.

The hybrid ARQ (Automatic Repeat reQuest) is a technology for improving the quality using a combination of an ARQ method and FEC (Forward Error Correction), and offers an advantage of being able to make an error correction function effectively through retransmission of packet data even for a transmission line whose quality varies. Particularly, it is possible to provide a further-improved quality by combining the result of the reception of the transmission data which have been transmitted for the first time and the result of the reception of the transmission data which have been retransmitted.

The following problem arises when a link imbalance has occurred. For example, in a case in which the uplink quality is good and the downlink quality is bad, the base station can receive a signal transmitted from the terminal properly, but the terminal cannot receive a response signal (ACK) transmitted from the base station. Because the terminal which has not been able to receive the ACK signal from the base station determines that the signal has not reached the base station and carries out retransmission processing, the throughput of the whole system decreases. In contrast, when the uplink quality is bad and the downlink quality is good, because the terminal retransmits the data to the base station in response to the NACK signal from the base station or communicates with the base station with excessive transmission power, the throughput of the whole system decreases.

When a cell is selected, as the primary cell, in a state in which a link imbalance has occurred, the following problem arises. For example, when a cell is selected, as the primary cell, on the basis of the communication quality of the downlink transmission line, there is a case in which although the quality of the downlink transmission line between the base station whose cell is the primary cell and the terminal is good, the quality of the uplink transmission line is not good. In such a case, because the base station cannot receive any signal transmitted from the terminal, the base station determines that a receiving error has occurred and then transmits a NACK signal to the terminal. The terminal which has received the NACK signal from the base station will retransmit packet data which it transmitted the last time up to a limited number of times (during a certain time interval) which is determined in advance. Thus, even when the communication quality of the downlink transmission line is good, a cell in which the communication quality of the uplink transmission line is not good is not appropriate as the primary cell.

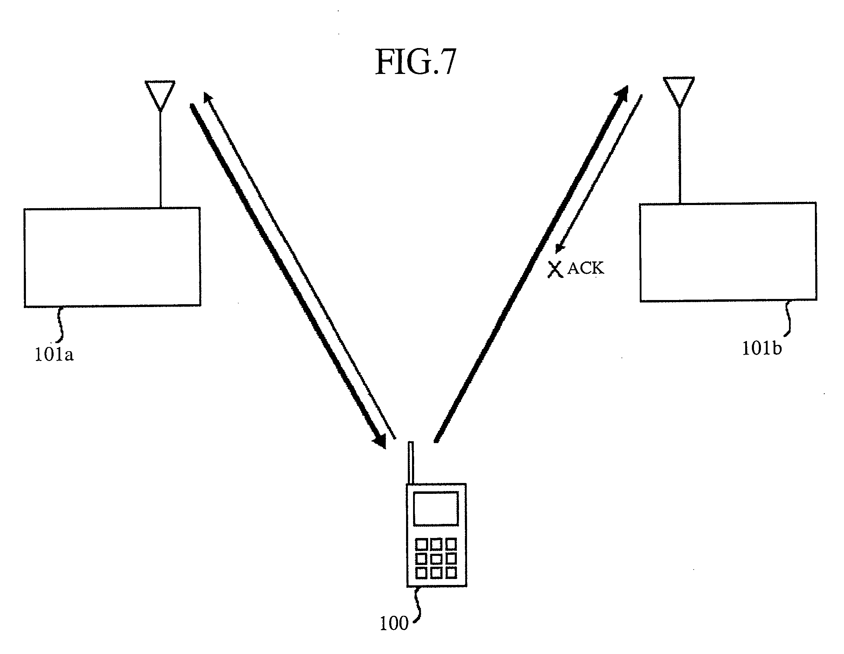

In contrast, when a cell is selected, as the primary cell, on the basis of the communication quality of the uplink transmission line, as shown in Fig. 7, the cell of the base station 101b in which the communication quality of the uplink transmission line is good and the communication quality of the downlink transmission line is bad is selected as the primary cell of the terminal 100. In such a case, because the base station 101b can receive any signal transmitted from the terminal 100 perfectly, the base station transmits an ACK signal to the terminal 100 as a response signal. However, because the communication quality of the downlink transmission line is bad, the terminal 100 cannot receive the ACK signal from the base station 101b appropriately, and therefore determines that the base station has not been able to receive the data which the terminal transmitted to the base station the last time. The terminal 100 then retransmits the data to the base station 101b up to a limited number of times (during a certain time interval) which is determined in advance. Thus, even when the communication quality of the uplink transmission line is good, the cell of the base station 101b in which the communication quality of the downlink transmission line is not good is not appropriate as the primary cell. Preferably, the cell of the base station 101a in which the communication quality of the uplink transmission line is inferior to that in the cell of the base station 101b and the quality of the downlink transmission line is superior to that in the cell of the base station 101b should be selected as the primary cell of the terminal 100. In order to make uplink high-speed packet communications function effectively, there is a necessity for the quality of the uplink transmission line and that of the downlink transmission line to be good, and it is desirable to select a cell in which no link imbalance has occurred as the primary cell. Therefore, there is a need to carry out a cell determination by taking into consideration both the quality of the uplink transmission line and that of the downlink transmission line, instead of only one of them.

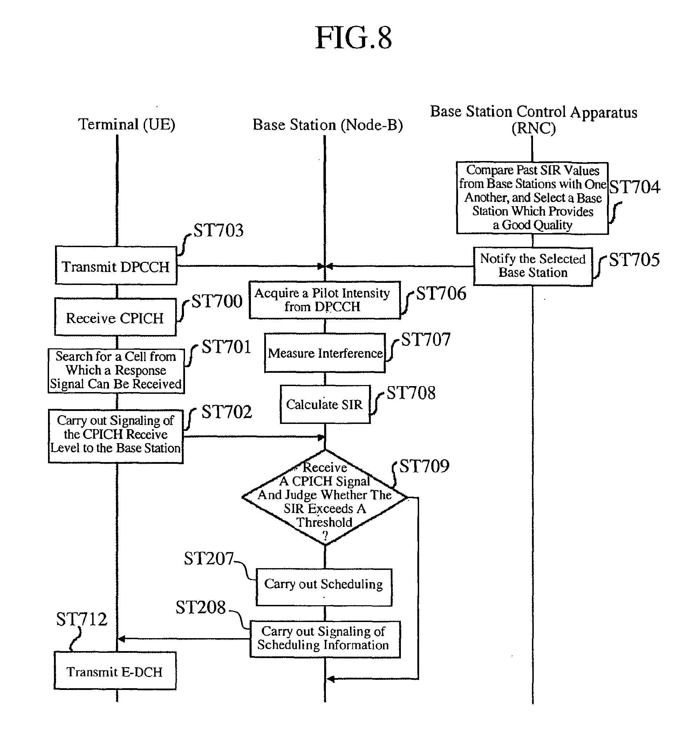

Fig. 8 is a flow chart explaining the primary cell determination processing in consideration of both the quality of the uplink transmission line and that of the downlink transmission line which each base station according to embodiment 1 of the present invention carries out. The base station estimates the state of the uplink transmission line, e.g. , the communication quality of the uplink transmission line by measuring SIR. Each base station receives, as state information, CPICH receipt information notified from the terminal, and determines the communication quality of the downlink transmission line on the basis of this CPICH receive level. Thus, the system in which each base station selects, as the primary cell, a cell can perform an appropriate primary cell determination according to change in the communication quality of the uplink transmission line. Because the system selects, as the primary cell, a cell on the basis of the communication quality of the uplink transmission line and that of the downlink transmission line in the cell, the system can prevent a cell in which a link imbalance has occurred from being selected as the primary cell, and the throughput of the whole system can be improved.

Hereafter, the primary cell determination processing which takes into consideration the communication quality of the uplink transmission line and that of the downlink transmission line will be explained with reference to Fig. 8. In step ST700, the terminal receives a signal associated with the CPICH (Common-Pilot Channel) which the base station uses in order to notify reference of timing to the terminal. At that time, the terminal receives not only the signal associated with the CPICH transmitted from the base station having a cell in which the terminal is staying, but also signals associated with CPICHs transmitted from two or more base stations having cells adjacent to the cell. In step ST701, the terminal compares the receive levels of the received CPICH signals from the two or more base stations which it has received with one another, and determines a base station whose communication quality of the downlink transmission line is good and from which the terminal can receive an ACK/NACK response signal perfectly. The terminal then, in step ST702, notifies, as state information, the level of the received CPICH signal to the base station which has been determined to provide the best reception quality by the terminal on the basis of the receive levels of the CPICHs. In contrast, the terminal does not carry out notification of the received CPICH level to any base station which has been determined to provide a worse reception quality by the terminal. Thus, when receiving the receive level of the received CPICH signal notified thereto from the terminal, each base station can recognize the communication quality of the downlink transmission line. In other words, because the terminal notifies no information about the CPICH receive level to any base station from which the terminal has received a CPICH signal whose receive level is not good, each base station can assume that the quality of the downlink transmission line to the terminal which has notified its CPICH receive level thereto is good. In step ST703, the terminal transmits a DPCCH signal to the base station by means of the DPCH transmitting unit 307.

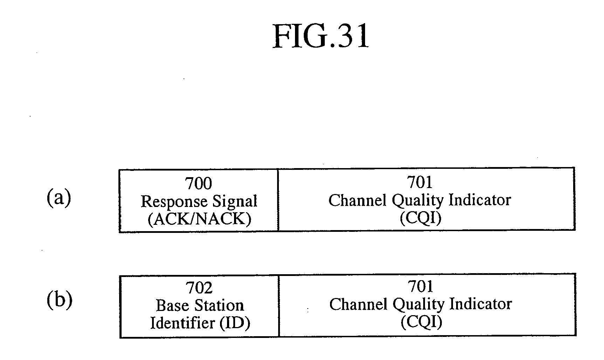

Fig. 31 is a diagram showing the format of a signal which the terminal uses to notify information on the communication quality of the downlink transmission line to the base station. The format of the signal shown in Fig. 31 (a) includes an ACK/NACK section 700 and a CQI (Channel Quality Indicator) section 701. The CQI for downlink packet communication does not need to distinguish a cell from another. On the other hand, the format of a signal for uplink packets shown in the Fig. 31(b) includes a base station identifier 702 instead of the ACK/NACK section 700. Because the number of bits of the base station identifier 702 increases with increase in the number of links, it can be also considered that bits are assigned to only upper-layer links having a good quality among SHO links so as to reduce the number of bits.

The base station control apparatus, in step ST704, determines a threshold which is used for the primary cell determination by comparing SIR values notified from base stations in the past with one another, and, in step ST705, notifies the threshold to each base station. As an alternative, the base station control apparatus can notify a Target SIR value to each base station instead of the threshold. When the quality of the uplink transmission line from the terminal is better than the threshold notified from the base station control apparatus, each base station carries out the primary cell determination in a case in which each base station is only the one with which the terminal has established a radio link (one-to-one type). In contrast, in a case in which if the terminal is in an SHO state (one-to-many type), each corresponding base station makes the scheduler therein operate in order to allocate a radio resource to the terminal. In step ST706, the DPCH receiving unit 407 of each base station acquires the pilot intensity from the DPCCH signal transmitted from the terminal. The interference amount measuring unit 408 of each base station then, in step ST707, measures the interference. The SIR calculating unit 409 of each base station then, in step ST708, calculates SIR on the basis of the pilot intensity acquired in step ST706 and interference measured in step ST707. Each base station can recognize the communication quality of the uplink transmission line from the SIR calculated in this way.

In step ST709, the schedule grant judgment unit 421 of each base station receives the CPICH receive level which is the state information notified from the terminal, and determines whether or not the SIR calculated in step ST708 satisfies the predetermined scheduling grant condition, in this case, the SIR exceeds the threshold. If each base station has received a CPICH signal from the terminal, each base station can determine that the communication quality of the downlink transmission line from each base station to the terminal is good, and, if the SIR exceeds the predetermined threshold, each base station can estimate that the communication quality of the uplink transmission line from the terminal to each base station is good. Thus, each base station determines the primary cell on the basis of the communication quality of the uplink transmission line and that of the downlink transmission line. When the condition in step ST709 is satisfied, the base station determines that both the communication quality of the uplink transmission line and that of the downlink transmission line are good, permits the scheduler therein to perform the scheduling processing, and, in step ST710, carries out the scheduling processing as the primary cell of the terminal. Each base station then notifies the scheduling result to the terminal. In contrast, when the condition in step ST709 is not satisfied, each base station judges that although the quality of the downlink transmission line to the terminal which has notified the CPICH receive level thereto is good, a problem arises in the communication quality of the uplink transmission line, and a so-called link imbalance has occurred in the uplink transmission line. In this case, each base station does not carry out the scheduling processing for the terminal. That is, each base station determines that each base station itself is unsuitable for the primary cell of the terminal. In step ST712, the terminal transmits a E-DCH signal on the basis of the scheduling result notified from each base station by means of the E-DCH transmitting unit 316.

When the CPICH receive level is notified from the terminal, each above-mentioned base station according to embodiment 1 of the present invention recognizes that the communication quality of the downlink transmission line from each base station to the terminal is good. The base station also judges whether or not the quality of the uplink transmission line from the terminal to the base station is good by comparing the pilot intensity of the DPCCH signal transmitted from the terminal and SIR calculated from the interference with the thresholds, respectively. When both the quality of the downlink transmission line and that of the uplink transmission line are good, each base station then carries out the scheduling process of allocating a radio resource to the terminal. Thus, because each base station itself determines whether a link imbalance has occurred in either of the uplink and downlink transmission lines with the terminal and also determines whether or not the cell thereof is proper as the primary cell of the terminal, unnecessary communications between each base station and the mobile station can be suppressed and therefore the throughput can be improved. Furthermore, because each base station determines whether or not the cell thereof is proper as the primary cell of a predetermined mobile station, instead of the base station control apparatus, some processes, such as a process of notifying the communication quality of the uplink transmission line etc. to the base station control apparatus, can be eliminated. Therefore, each base station can shorten the time required to carry out the primary cell determination processing, and can respond to change in the communication quality of the uplink transmission line promptly. In further detail, each base station makes it possible to appropriately carry out AMC (Adaptive Modulation and Coding) according to the current transmission line quality by responding to change in the transmission line promptly, and it can be also expected to provide an advantage of reducing transmission errors and improving the throughput.

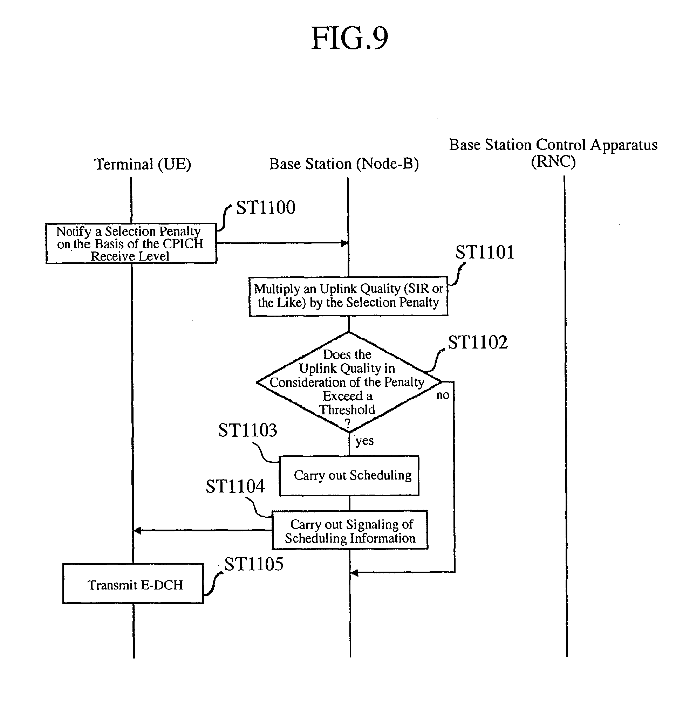

Each base station as previously explained determines that the communication quality of the downlink transmission line is good on the basis of the notification of the CPICH receive level measured by the terminal, as the state information, to each base station. When then assuming that the quality of the uplink transmission line is good on the basis of the SIR, each base station carries out the scheduling processing for the terminal. As an alternative, there can be provided a method of, instead of notifying, as the state information, the CPICH receive level from the terminal to each base station, notifying, as the state information, a coefficient (or a selection penalty) for "thinning out" the communication quality of the uplink transmission line according to the CPICH receive level to each base station. Next, a process of carrying out the primary cell determination on the basis of the "selection penalty" notified from the terminal, which is performed by each base station, will be explained with reference to Fig. 9. The selection penalty is used to set a penalty coefficient to a CPICH receive level which is lower than a reference CPICH receive level. In contrast, a coefficient can be set to a CPICH receive level which is higher than the reference CPICH receive level. In either case, a coefficient is set relatively to the reference CPICH receive level. Either of the penalty coefficient setting methods can be adopted. The method of transmitting the penalty is simply taken as an example. Instead of transmitting the penalty value, the current quality (quality indicator) can be transmitted as the state information so that the receive side can acquire the penalty on the basis of the current quality. This variant can provide the same advantage.

Fig. 9 is a flow chart explaining the variant of the primary cell determination process in consideration of the quality of the uplink transmission line and that of the downlink transmission line which each base station according to embodiment 1 of the present invention carries out. Although not illustrated in Fig. 9, it is assumed that the terminal has performed steps ST700, ST701, and ST703 shown in Fig. 8 before performing ST1100 shown in Fig. 9. It is further assumed that each base station has performed steps ST706 to ST708 shown in Fig. 8 before performing step ST1101. In the flow chart shown in Fig. 9, the primary cell is determined on the basis of the SIR which is measured, as the communication quality of the uplink transmission line, by each base station, and which is calculated as the radio uplink state estimation result, and the selection penalty notified from the terminal as the communication quality of the downlink transmission line. The selection penalty which is referred to here is a kind of parameter which is used to "thin out" the communication quality of the uplink transmission line on the basis of the communication quality of the downlink transmission line and to assume that the uplink transmission line virtually has a quality worse than the actual communication quality of the uplink transmission line when the communication quality of the downlink transmission line is not good, in order to prevent a cell having a bad communication quality in its downlink transmission line from being selected. By notifying the selection penalty coefficient to each base station, the number of bits and the number of times that communications are carried out can be decreased as compared with a case in which the CPICH receive level is notified to each base station.

In step ST1100 of Fig. 9, the terminal calculates the selection penalty value by means of the primary cell determination unit 319 on the basis of the CPICH level measured by the CPICH receiving unit 309. The terminal then notifies the selection penalty value calculated by the primary cell determination unit 319 to each base station via the E-DPCCH transmitting unit 313. Each base station, in step ST1101, corrects for the communication quality (SIR) of the uplink transmission line calculated by the SIR calculating unit 409 using the selection penalty notified thereto from the terminal. By carrying out this processing, when the communication quality of the downlink transmission line is bad, each base station corrects for the communication quality of the uplink transmission line using the selection penalty coefficient by "thinning out" the communication quality and therefore assumes that the communication quality of the uplink transmission line is lower than'the actual one even if the cell of each base station has a good communication quality in its uplink transmission line. In step ST1102, each base station determines whether or not the communication quality (referred to as an assumed uplink transmission line quality from here on) of the uplink transmission line, which is corrected with the selection penalty notified from the terminal, exceeds a threshold. When, in step ST1103, determining that the assumed uplink transmission line quality exceeds the threshold, each base station carries out the scheduling processing. Each base station then, in step ST1104, notifies the scheduling result to the terminal.

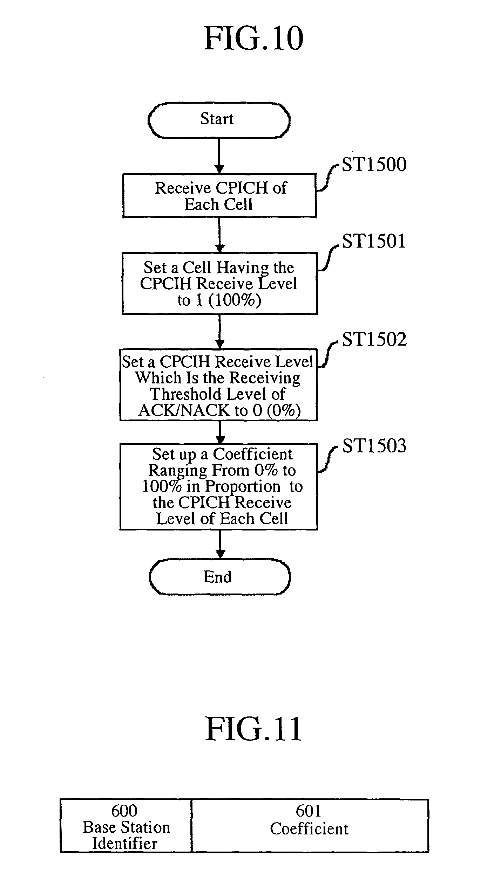

The above-mentioned "selection penalty" is a correction coefficient or a correction threshold which reflects the quality of a channel in the opposite direction at the time of the primary cell determination, and an example of a concrete method of determining the selection penalty will be shown below. Fig. 10 is a flow chart explaining the selection penalty determining process. The selection penalty determining process shown in Fig. 10 is carried out by the terminal in step ST1100 of Fig. 9. Hereafter, the details of the selection penalty determining process will be explained with reference to Fig. 10. In step ST1500, the terminal 100 receives CPICH signals from two or more base stations, and measures the receive level of each CPICH signal. In step ST1501, the terminal 100 specifies a cell which provides the best CPICH receive level on the basis of the measured receive levels of the two or more CPICH signals, and sets the CPICH receive level from this specified cell to "1" (100%). The terminal 100 then, in step ST1502, specifies a cell which has a CPICH receive level which is the worst among the two or more measured CPICH receive levels with which the terminal can receive ACK/NACK, and sets the CPICH receive level from this specified cell to "0" (0%). Through the above-mentioned processing, the terminal 100 had recognized the cell which provides the best CPICH receive level and the cell which provides the worst CPICH receive level among cells from each of which the terminal can receive ACK/NACK. The terminal 100 further, in step ST1503, sets a coefficient ranging from 0% to 100% to the CPICH receive level from each other cell on the basis of the best CPICH receive level set to "1" and the worst CPICH receive level set to "0." The terminal 100 then notifies the penalty coefficient which it has set as previously explained to each base station 101 for which it has measured the CPICH receive level.

Fig. 11 is a diagram showing the format of a signal for notifying the selection penalty coefficient which the terminal has set up by carrying out the processing as shown in Fig. 10 to each base station. The signal shown in Fig. 11 includes a base station identifier 600 and the coefficient 601. The base station identifier 600 is an identifier for identifying a base station which is the notification destination of the selection penalty coefficient. In a case in which each base station can be identified automatically using a channel which each base station uses, for example, in a case in which the selection penalty coefficient is notified to each base station using a dedicated channel which is individually associated with each base station which is the transmission destination, the base station identifier 600 can be omitted from the signal shown in Fig. 11. As the selection penalty coefficient 601, a ratio with which it can be assumed that the communication quality is lower than the actual communication quality is transmitted. The coefficient can be expressed as either a true value or a logarithm value.

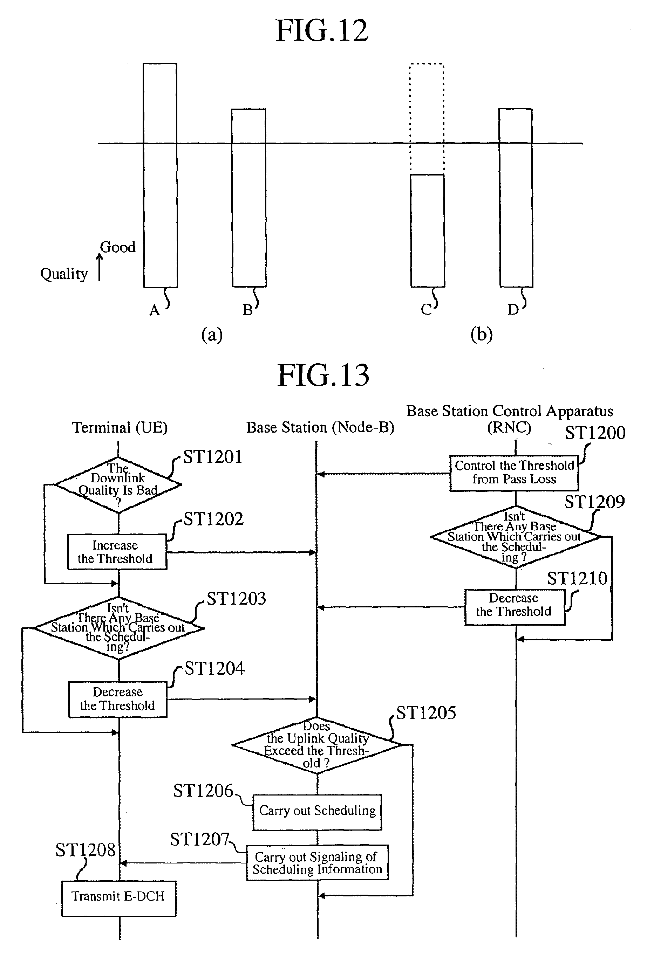

Fig. 12 is an explanatory diagram showing an example of comparison between a case in which the primary cell is selected without using the selection penalty coefficient and a case in which the primary cell is selected using the selection penalty coefficient in a certain base station. In the following explanation, it is assumed that the terminal 1 has a better communication quality in its uplink transmission line than the terminal 2, and the terminal 2 has a better communication quality in its downlink transmission line than the terminal 1. It is further assumed that the terminal 1 has notified the selection penalty coefficient of 50% to the base station and the terminal 2 has notified the selection penalty coefficient of 100% to the base station on the basis of the communication quality of the downlink transmission line of each of the terminals. Fig. 12 (a) explains a case in which the certain base station determines the primary cell using the measured communication quality A of the uplink transmission line of the terminal 1 and the measured communication quality B of the uplink transmission line of the terminal 2 (both of them are uplink SIR values). Fig. 12(b) explains a case in which the certain base station determines the primary cell using the "assumed uplink qualities" C and D which the certain base station has obtained by thinning out the measured uplink transmission quality of the terminal 1 and that of the terminal 2 using the selection penalty coefficients (these coefficients are 50% and 100%) respectively notified from the terminals 1 and 2, to correct for them. In the case of Fig. 12(a), because each of the uplink transmission quality A of the terminal 1 and uplink transmission quality B of the terminal 2 exceeds the threshold TH, the certain base station can become the primary cell of any of the terminals.

As previously mentioned, Fig. 12(b) explains a case in which the certain base station determines the primary cell using the assumed uplink qualities C and D which the certain base station has obtained by correcting for the measured uplink transmission qualities A and B of the terminals 1 and 2 using the selection penalty coefficients. In this case, because while the assumed uplink quality C of the terminal 1 is less than the threshold TH, the assumed uplink quality D of the terminal 2 (= the uplink quality B) exceeds the threshold TH, the certain base station runs as the primary cell of the terminal 2, and carries out the scheduling for the terminal 2. Thus, because the above-mentioned base station corrects for the communication quality of the uplink transmission line using the selection penalty coefficient which reflects the communication quality of the downlink transmission line to obtain the assumed uplink transmission line quality, and then determines the primary cell, reduction in the throughput caused by ACK/NACK errors in the downlink channel can be prevented.

In the primary cell determination processing shown in Fig. 9, the terminal notifies the selection penalty to each base station according to the communication quality of the downlink transmission line, and each base station corrects for the communication quality of the uplink transmission line according to this selection penalty so as to avoid carrying out the scheduling for a terminal for which it provides a bad communication quality in its downlink transmission line even when the communication quality of the uplink transmission line from the terminal is good. Instead of the terminal notifying the selection penalty to each base station according to the communication quality of the downlink transmission line, each base station can adjust the threshold which is used for the primary cell determination, i.e., the scheduling grant condition according to the communication quality of the downlink transmission line. Next, the primary cell determination process of adjusting the threshold of each base station according to the communication quality of the downlink transmission line will be explained with reference to Fig. 13.

In step ST1200 of Fig. 13, the base station control apparatus sets up the threshold which is used for the primary cell determination process on the basis of, for example, path loss information, and notifies the threshold to each base station. In the meantime, the terminal, in step ST1201, measures the downlink CPICH receive level. When the downlink CPICH receive level is low (i.e., a probability that an error of reception of ACK/NACK will occur is high), the terminal, in step ST1202, delivers, as state information, a control instruction for raising the threshold used for the primary cell determination to each base station via the E-DPCCH transmitting unit 313. As a result of notifying the raising of the threshold from the terminal to each base station, there is a possibility that base stations which carry out the scheduling to allocate a radio resource to the terminal become nonexistent. The terminal then, in step ST1203, judges whether there is any base station which carries out the scheduling for the terminal by monitoring whether the scheduling result is notified thereto from each base station using the scheduling information receiving unit 314.

As a method of judging whether there is any base station which carries out the scheduling for the terminal, there can be provided a method of determining whether there is any base station which carries out the scheduling from a notification from the scheduler of each base station, and a method of determining whether there is any base station which carries out the scheduling by means of the terminal itself. In the method of determining whether there is any base station which carries out the scheduling from a notification from the scheduler of each base station, each base station provides, as scheduling information, a notification that the terminal is responsible for the scheduling to the terminal when the SIR level exceeds the threshold. In contrast, when the SIR level does not exceed the threshold, each base station provides a notification that the terminal is not responsible for the scheduling to the terminal. In the method of determining whether there is any base station which carries out the scheduling by means of the terminal itself, the terminal assumes that any base station from which the terminal receives the scheduling information within a fixed time is responsible for the scheduling, whereas the terminal assumes that any base station from which the terminal does not receive the scheduling information within a fixed time is not responsible for the scheduling. When determining that there is no base station which notifies the scheduling result thereto, the terminal, in step ST1204, furnishes, as state information, an instruction for lowering the threshold used for the primary cell determination to each base station via the E-DPCCH transmitting unit 313.

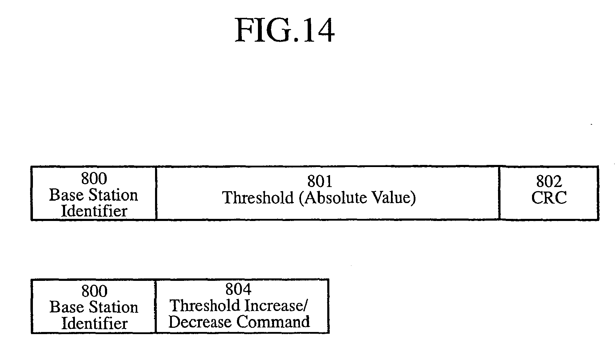

As a method of furnishing the threshold control instruction to each base station, there can be provided a method of transmitting the threshold value to each base station, and a method of transmitting a control instruction for instructing increase or decrease in the threshold to each base station. Fig. 14 is a diagram showing the format of a signal which is used to notify the threshold to each base station. Fig. 14(a) shows the format of a signal which is used to notify the threshold value to each base station, and Fig. 14(b) shows the format of a signal which is used to furnish the instruction for instructing increase or decrease in the threshold to each base station. When transmitting the threshold to each base station, as shown in Fig. 14(a), the terminal adds a base station identifier 800, a threshold 801, and a CRC 802 for detecting errors to the signal. In a case in which the destination of reception of the channel is only a specific base station, the base station identifier 800 can be omitted. The CRC 802 is not indispensable to the signal format. However, because the threshold varies largely when a reception error has occurred, the CRC is needed to keep the threshold from varying at the time of occurrence of a reception error. The notifying of the threshold directly to each base station has an advantage of being able to enable each base station to change the threshold promptly. However, there is a problem that the number of times that signaling for communications is carried out is increased. The UL-E-DPCCH 204 is used, as the channel onto which the signal is piggybacked, so that the terminal transmits the control information to each base station.

There is also the method of notifying an instruction for instructing each base station to increase or decrease the threshold to each base station using the format shown in Fig. 14(b). The signal format shown in Fig. 14(b) includes a base station identifier 800 and a threshold increase or decrease instruction 804. Because the threshold increase or decrease instruction 804 is the one for instructing each base station to increase or decrease the threshold, 1 bit is adequate for the amount of information included in the instruction. Two or more bits of data can be used as the threshold increase or decrease instruction, and makes it possible to increase the increment or decrement in the threshold. Furthermore, the expression of the single instruction redundantly with two or more bits of data can also prevent occurrence of errors. The UL-E-DPCCH 204 is used, as the channel onto which the data is piggybacked, so that the terminal transmits the control information to each base station. In a case in which the number of signaling bits is small, a feedback bit (FBI) which exists in a DPCCH which is a prior art dedicated channel can be alternatively used.

### Embodiment 2.

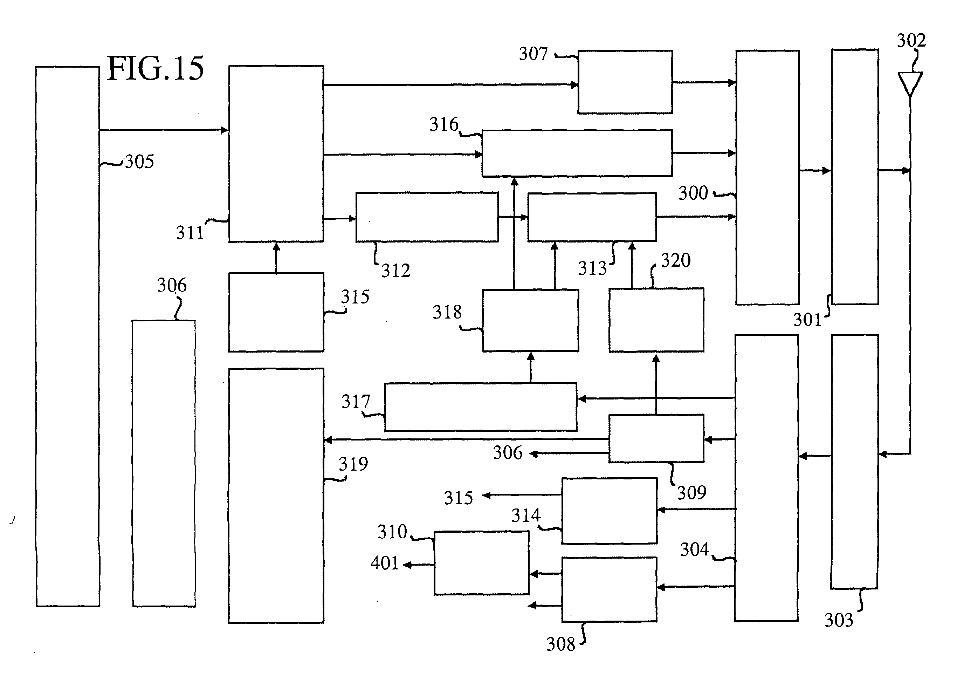

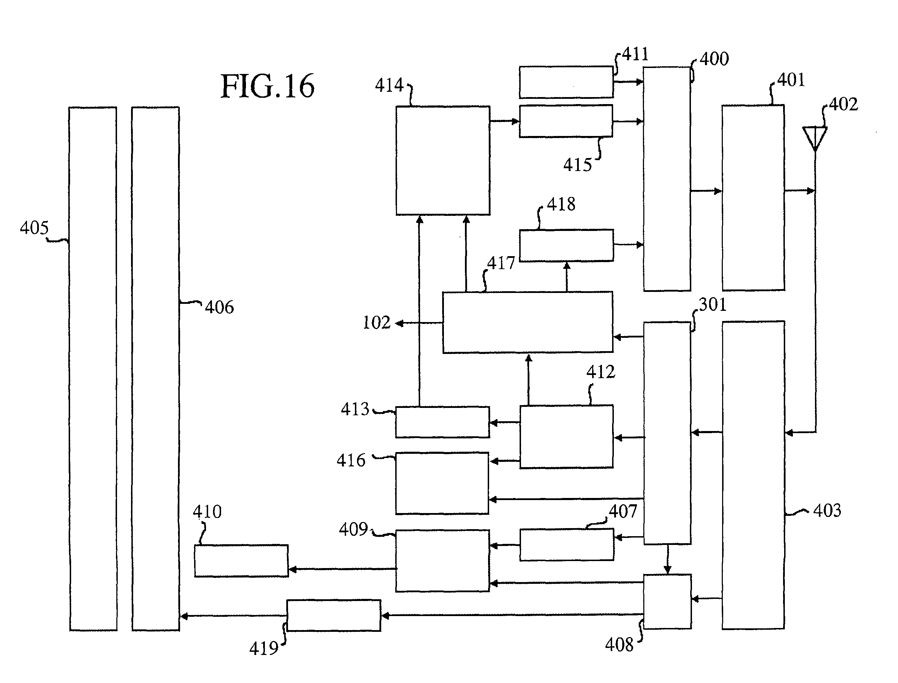

In embodiment 1, in order to appropriately carry out the primary cell determination process at a time when a link imbalance has occurred, each base station carries out the determination process of determining the primary cell in consideration of the communication quality of the uplink transmission line and that of the downlink transmission line. As an alternative, the terminal can be so constructed as to perform the primary cell determination process in consideration of the communication quality of the uplink transmission line and that of the downlink transmission line. Fig. 15 is a block diagram showing the structure of a terminal according to embodiment 2 of the present invention. In Fig. 15, a primary cell determination unit 319 is the one which receives state information on the state of the radio uplink, and which selects a base station which has a communication quality in its radio downlink which satisfies a scheduling grant condition which is set in advance. The primary cell determination unit determines the primary cell, which carries out the scheduling processing, in consideration of the communication quality of the uplink transmission line and that of the downlink transmission line. A DPCH receiving unit 308 is a radio uplink state information receiving unit which receives the state information indicating the state of the radio uplink measured by a base station, for example, an SIR value. In Fig. 15, the same reference numerals as shown in Fig. 6 denote the same components or like components, and therefore the explanation of the components will be omitted hereafter. Fig. 16 is a block diagram showing the structure of a base station which communicates with the mobile communication terminal equipment shown in Fig. 15. The base station shown in Fig. 16 includes all the components included in the base station shown in Fig. 3 except the load notifying unit 420, schedule grant judgment unit 421, CPICH level information receiving unit 422, primary cell determination instructing receiving unit 423, and threshold receiving unit 424, which are components needed for the primary cell determination processing. The other reference numerals shown in Fig. 16 denote the same components as shown in Fig. 3 or like components, and therefore the explanation of the components will be omitted hereafter.

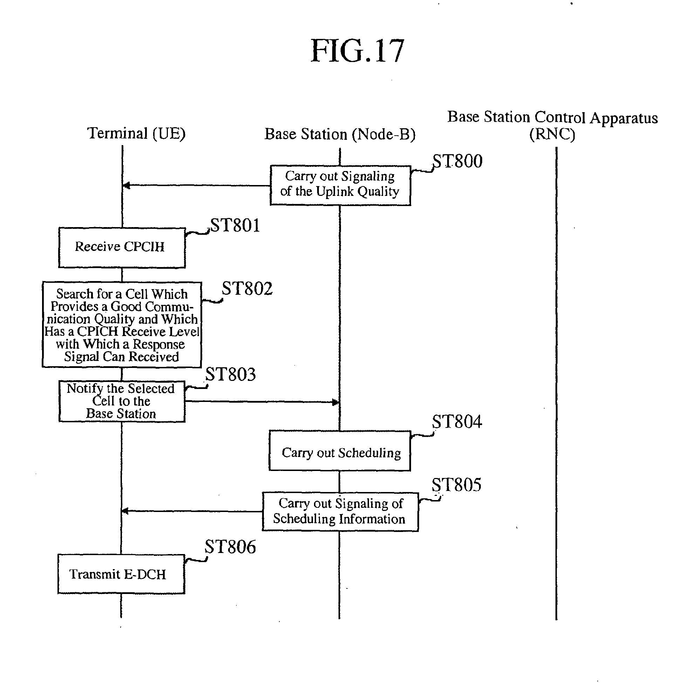

Fig. 17 is a flow chart showing the primary cell determination process which is carried out by the mobile communication terminal equipment according to embodiment 2 of the present invention. Hereafter, the primary cell determination process will be explained with reference to Fig. 17. In step ST800, the base station measures the communication quality of the uplink transmission line from the terminal to the base station, and notifies, as state information, the measured communication quality of the uplink transmission line to the terminal. The base station uses, as this communication quality of the uplink transmission line, the SIR value of an uplink dedicated channel. In step ST801, the terminal receives a signal associated with the CPICH from the base station using a CPICH receiving unit 309. The terminal can recognize the communication quality of the downlink transmission line by measuring the receive level of this signal associated with the CPICH. In step ST802, the terminal then determines the primary cell on the basis of the communication quality of the uplink transmission line notified from the base station, and the communication quality of the downlink transmission line which it has measured by receiving a signal associated with the CPICH. Concretely, the terminal searches for a cell which provides a good communication quality in its uplink transmission line and which has a CPICH receive level which is good enough to receive a response signal. The terminal notifies information about the cell which is thus determined to exhibit a good communication quality in both the uplink transmission line and the downlink transmission line to the base station. The terminal uses, for example, a UL-E-DPCCH 204 for the notification of the information about the cell which is determined to exhibit a good communication quality in both the uplink transmission line and the downlink transmission line to the base station. When the information about the cell which the terminal has selected is notified to the base station, an uplink scheduler 414 of the base station, in step ST804, carries out the scheduling process of allocating a radio resource to the terminal. The base station then, in step ST805, carries out a process of signaling the scheduling information to the terminal. The base station uses, for example, a DL-E-DPCCH 205 for the notification of this scheduling information. When receiving the scheduling information, the terminal, in step ST806, transmits data via the E-DCH using a E-DCH transmitting unit 316.

The above-mentioned mobile communication terminal equipment according to embodiment 2 of the present invention can recognize that the communication quality of the uplink transmission line is good when the communication quality of the uplink transmission line is notified thereto from the base station, and can recognize that the communication quality of the downlink transmission line is good by measuring the CPICH receive level. Because the mobile communication terminal equipment issues a scheduling request to a base station which exhibits a good communication quality in the uplink transmission line, and which has a communication quality in the downlink transmission line which is good enough for the mobile communication terminal equipment to receive an ACK/NACK response signal, a problem that a base station in which a link imbalance has occurred in the uplink and downlink transmission lines thereof is selected as the primary cell can be prevented from arising. Therefore, transmission of signals between the base station and the mobile station is carried out smoothly, and the so-called throughput can be improved. Furthermore, because the terminal itself determines the primary cell on the basis of the quality of the downlink transmission line from the base station, the determination of the primary cell reflects the newest communication quality of the downlink transmission line.

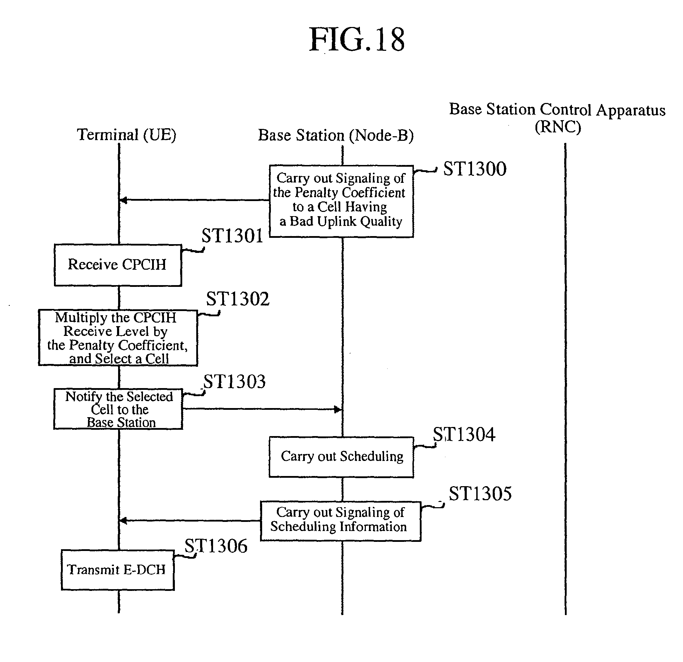

The above-mentioned terminal determines whether or not the communication quality of the uplink transmission line is good according to the communication quality of the uplink transmission line which is notified thereto from the base station. As an alternative, as the state information which is notified from the base station to the terminal, a selection penalty coefficient which reflects the communication quality of the uplink transmission line can be adopted instead of the communication quality of the uplink transmission line. Hereafter, a process of determining the primary cell on the basis of the "selection penalty" notified from the base station which the terminal carries out will be explained with reference to Fig. 18. The selection penalty is a kind of coefficient for correcting for the communication quality of the downlink transmission line according to the communication quality of the uplink transmission line so as to prevent a cell which has a not-good communication quality in the uplink transmission line from being selected as the primary cell, and is used in order to virtually assume that the communication quality of the downlink transmission line is worse than the actual communication quality of the downlink transmission line. Compared with the method of directly notifying the measurement result of the communication quality of the downlink transmission line to the base station, this method has an advantage of being able to reduce the number of bits and the frequency of signaling.

Fig. 18 is a flow chart for explaining the variant of the primary cell determination process in consideration of the uplink and downlink qualities which is carried out by the mobile communication terminal according to embodiment 2 of the present invention. In step ST1300, the base station signals the penalty coefficient to the terminal which provides a bad uplink quality via the scheduling information signaling unit 415. The signaling can be carried out via either the DL-E-DPCCH or another channel. Because the penalty coefficient notified from the base station reflects the communication quality of the uplink transmission line, the terminal can recognize the communication quality of the uplink transmission line from this penalty coefficient. The terminal then, in step ST1301, receives a signal associated with the CPICH transmitted from the base station. The terminal can thus recognize the communication quality of the downlink transmission line from the receive level of the received signal associated with the CPICH. The terminal, in step 1302, multiplies the receive level of the received signal associated with the CPICH indicating the communication quality of the downlink transmission line by the penalty coefficient, and determines the primary cell after estimating the communication quality of the downlink transmission line to be worse than the actual communication quality. The terminal then, in step ST1303, notifies the primary cell determined as mentioned above to the base station using the E-DPCCH.

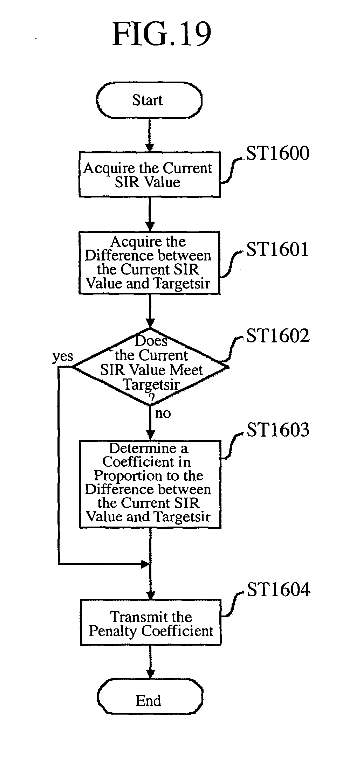

Fig. 19 is a flow chart for explaining a process of determining the selection penalty coefficient which is carried out by the base station. Hereafter, the process of determining the penalty coefficient by the base station will be explained with reference to Fig. 19. In step ST1600, the base station acquires the current SIR value using an SIR calculating unit 409. This SIR value shows that the larger the SIR value the higher the quality. In step ST1601, the SIR calculating unit 409 calculates the difference between the current SIR value and TargetSIR. This TargetSIR value shows an SIR level which is required to ensure a desired quality. In step ST1602, the SIR calculating unit 409 determines whether the measured SIR level meets the communication quality defined by TargetSIR (i.e. the current SIR value is larger than TargetSIR). When determining that the measured SIR level meets the communication quality defined by TargetSIR, the base station determines that the communication quality of the uplink transmission line is good enough. In contrast, when the measured SIR level does not meet the communication quality defined by TargetSIR, the base station determines that the communication quality of the uplink transmission line is not good, and then advances to step ST1603. In step ST1603, the SIR calculating unit 409 determines a coefficient which is proportional to the difference between the current SIR value and TargetSIR. It can be assumed that the larger difference between the current SIR value and TargetSIR, the worse communication quality the uplink transmission line has. That is, the selection penalty coefficient value increases with increase in the difference between the current SIR value and TargetSIR. In step ST1604, the scheduling information signaling unit 415 transmits, as state information, the selection penalty coefficient which has been determined through the above-mentioned processing to the terminal.

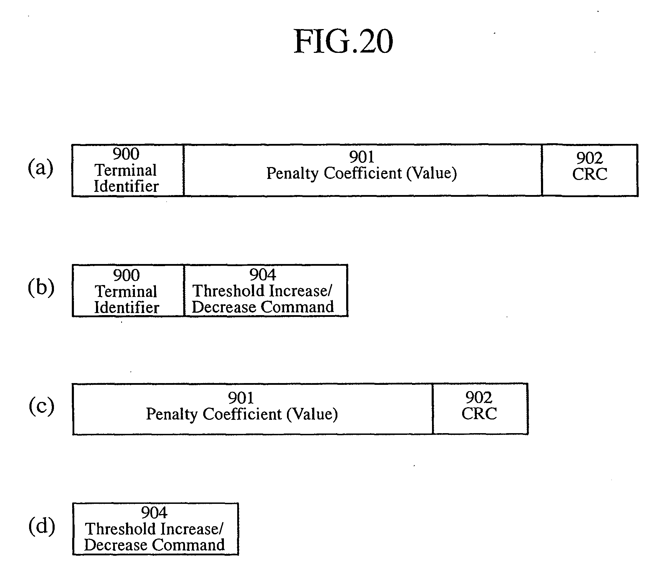

Next, the format which is used when signaling this penalty coefficient from the base station to the terminal will be explained. Fig. 20 is a diagram showing the formats of signals which are used to transmit the selection penalty coefficient and a threshold increase/decrease instruction to the terminal. Fig. 20(a) shows the format of a signal which is used to notify the selection penalty coefficient to the terminal via a common channel, Fig. 20(b) shows the format of a signal which is used to notify the threshold increase/decrease instruction to the terminal via the common channel, Fig. 20(c) shows the format of a signal which is used to notify the selection penalty coefficient to the terminal via a dedicated channel, and Fig. 20(d) shows the format of a signal which is used to notify the threshold increase/decrease instruction to the terminal via the dedicated channel. As shown in Figs. 20 (a) and 20 (b), in a case in which the selection penalty coefficient and threshold increase/decrease instruction are notified to the terminal via the common channel, it is necessary to notify information about the terminal which is the destination individually. Therefore, it is necessary to incorporate a terminal identifier 900 into the signal format. An identifier reserved for this purpose can be newly defined as this terminal identifier 900. As an alternative, any of the following six types of existing terminal identifiers: 1) Serving RNC (Radio Network Controller)/BSS (Base Station Subsystem) RNTI (s-RNTI: Radio Network Temporary Identity); 2) Drift RNC/BSS RNTI (d-RNTI); 3) Cell RNTI (c-RNTI); 4) UTRAN (Universal Terrestrial Radio Access Network)/GERAN (GSM EDGE Radio Access Network) RNTI (u-RNTI); 5) DSCH (Downlink Shared Channel) RNTI (DSCH-RNTI); and 6) HS-DSCH (High Speed Downlink Shared Channel) RNTI (HS-DSCH RNTI) can also be used. In this case, because the selection penalty coefficient, as well as the terminal identifier, is notified to the terminal, it is desirable to attach a CRC bit 902 to the signal so as to enable detection of errors.

The signal format shown in Fig. 20(b) which is used to notify the threshold increase/decrease instruction using the common channel will be explained. In this case, the signal only has to have at least 1-bit information. Therefore, the threshold increase/decrease instruction 904 is added to the terminal identifier 900. The signal can have information of two or more bits to increase its redundancy so that reception errors can be reduced. The signal format shown in Fig. 20(c) which is used to notify the selection penalty coefficient using the dedicated channel will be explained. In the case of using the dedicated channel, the terminal identifier becomes unnecessary and what is necessary is just to incorporate the selection penalty coefficient (value) 901 into the signal format. Also in the signal format shown in Fig. 20(d) which is used to notify the threshold increase/decrease instruction using the dedicated channel, the terminal identifier becomes unnecessary and what is necessary is just to incorporate the threshold increase/decrease instruction 904 into the signal format. The terminal notifies the selected primary cell to the base station via the UL E-DPCCH 204 channel. In a case in which this channel is used as the dedicated channel, what is necessary is just to transmit 1-bit information simply indicating that the base station is selected or not selected as the primary cell. On the other hand, in a case in which the UL E-DPCCH 204 is used as the common channel, a base station identifier Cell Identifier is added to the signal so that it is transmitted to the terminal. Actually, because an error easily occurs if the signal consists of 1-bit information, it is desirable to make the signal have two or more bits to transmit it to the terminal.

When the base station recognizes that it has been selected as the primary cell from the notification from the terminal, the base station, in step ST1304, carries out the scheduling to allocate a radio resource to the terminal, and then, in step ST1305, notifies the scheduling information to the terminal. The terminal, in step 1306, transmits packet data to the base station using the E-DCH on the basis of the scheduling information notified thereto from the base station. As mentioned above, the above-mentioned terminal recognizes the communication quality of the uplink transmission line from the selection penalty notified thereto from the base station and also recognizes the communication quality of the downlink transmission line from the CPICH receive level, and estimates the communication quality for the CPICH receive level to be worse than the actual one on the basis of the selection penalty, so that the terminal can determine the primary cell in consideration of whether a link imbalance has occurred. The terminal can alternatively estimate the communication quality for the CPICH receive level to be better than the actual one using an offset (Cell Individual Offset) instead of the penalty, and can therefore implement the same function.

As previously explained, the terminal estimates the communication quality of the downlink transmission line to be worse than the actual one using the selection penalty coefficient which reflects the communication quality of the uplink transmission line which is notified thereto from the base station so as to determine the primary cell. As an alternative, instead of measuring the communication quality of the uplink transmission line in the base station, and then signaling a penalty coefficient corresponding to it to the terminal, the terminal itself can estimate the communication quality of the uplink transmission line on the basis of a TPC command transmitted from each base station so as to determine the primary cell. This method has an advantage of being able to simplify the hardware of each base station because it is not necessary to add signaling for notifying the uplink quality and the terminal can select the cell. In other words, the TPC command is piggybacked onto the dedicated channel, and exists in each of base stations (Node-B) and terminals, and no terminal identifier is needed. The TPC command can be an instruction which reflects the difference between the current SIR value and the TargetSIR value. That is, by applying the TPC command, inexplicit signaling (i.e. signaling which is of type which enables analogy of similar information indirectly without carrying out direct signaling transmission) can be implemented.

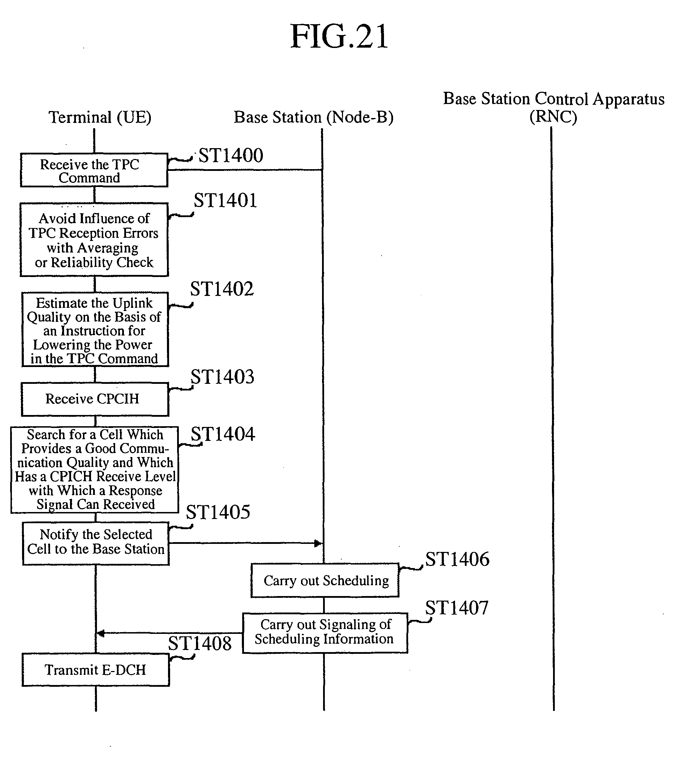

Fig. 21 is a flow chart for explaining the variant of the primary cell determination process in consideration of the uplink and downlink qualities which is carried out by the mobile communication terminal according to embodiment 2 of the present invention. The base station sets up TPC for controlling the transmission power of the mobile station according to the uplink communication quality, and notifies it to the mobile station. The mobile station can use this TPC as a kind of state information which reflects the communication quality of the uplink transmission line. In step ST1400, the base station transmits the TPC command to the terminal. In step ST1401, the terminal performs an averaging process or a reliability check process on the TPC command to eliminate influence of TPC receiving errors on the TPC command using a TPC command receiving unit 310, and then recognizes the TPC command notified from the base station. In step ST1402, the terminal estimates the communication quality of the uplink transmission line on the basis of a transmit-power-control instruction for instructing the terminal to raise or lower the transmission power of the terminal, which is included in the TPC command. For example, when the transmit-power-control instruction of the TPC command indicates "transmission power raising", the terminal can estimate that the communication quality of the uplink transmission line is not good. In contrast, when the transmit-power-control instruction indicates "transmission power lowering", the terminal can estimate that the communication quality of the uplink transmission line is good.

A process of avoiding TPC command errors in step ST1401 of Fig. 21 will be explained. As a first method (processing carried out by the mobile station) of avoiding TPC command errors, there is a method of excluding TPCs having low reliability. As the reliability, a signal-to-interference ratio (SIR) is acquired from the CPICH receive level or an individual pilot in the DPCCH. When the SIR value is low, it can be assumed that the TPC command from the base station cannot be trusted, and the TPC command is then excluded. However, in a case in which this first method is applied to a cell in which the communication quality of the uplink transmission line is good and the communication quality of the downlink transmission line is bad, that is, a link imbalance has occurred, it should be noted that restrictions are imposed on the use of the first method because TPCs from base stations are disregarded through the reliability checking processing carried out by the terminal. As a second method of avoiding TPC command errors, there is a method of averaging the TPC command (processing carried out by the mobile station). It can be assumed that the averaging is a filter of a certain type, and errors which occur in the TPC command can be removed through such filtering processing. Although the averaging can prevent influence of errors on the TPC command, there is a problem that a delay develops by the time the result comes out in a case in which the length of time that the TPC command is averaged is long. As a measure which can be taken against the problem, a method of varying the length of time that the TPC command is averaged according to the reliability can be considered. That is, the length of time that the TPC command is averaged is shortened when the reliability is high, whereas the length of time that the TPC command is averaged is lengthened when the reliability is high.

As a third method of avoiding TPC command errors, there can be provided a method of increasing the transmission power for transmission of the TPC command (processing carried out by the base station). Three parameters can be specified as power-off sets (specification parameters indicating increment in the power) of the DPCCH to the DPDCH, P01 (Power Offset 1) is a power-off set of TFCI (Transport format combination indicator), PO2 is a power-off set of the TPC (Transmission power control) instruction, and PO3 is a power-off set of the pilot of the DPCCH. When uplink enhancement is used, that is, when the base station is instructed by the base station control apparatus to add a large-volume uplink channel, such as a E-DCH, TPC errors can be prevented from occurring by increasing the power-off set for TPC (i.e. PO2) from a normal value. An explanation will be made referring now to Fig. 21. In step ST1400, the power-off set is increased in the TPC command which the mobile station has received from the base station by the base station which is instructed to add the E-DCH by the base station control apparatus.

Furthermore, in a case in which the reliability checking according to the first method uses the dedicated channel pilot, the exclusion of the TPC command which is caused by the reliability checking can be prevented by increasing not only PO2, but also the power-off set PO3 of the pilot of DPCCH. Because the third method increases the TPC transmission power itself, an enhanced effect of avoiding TPC command errors can be expected. However, the third method has a drawback of using the transmission power of the base station to excess. In a case in which the third method is used together with the first method, this method of increasing the transmission power is applied only to a base station having a good uplink quality (i.e. a base station which has issued an instruction for lowering the power for TPC to the terminal). Because information needed for the terminal is information about base stations having a good communication quality in the uplink transmission line, and the TPCs from base stations with low reliability are excluded using the third method together with the first method and there is therefore no possibility that a base station having a bad communication quality in the uplink transmission line is mistaken for one having a good communication quality in the uplink transmission line, the power of a base station having a bad communication quality in the uplink transmission line does not need to be raised. Therefore, the transmission power of such a base station can be saved.

As a fourth method of avoiding TPC command errors (processing carried out by the base station side and the mobile station), there can be provided a method of using another explicit signaling together in addition to TPC. In order not to spoil the merit of not adding signaling, there is a method of using a TFCI hard spirit mode. The TFCI hard spirit mode exists only in a downlink from a base station to a terminal in a W-CDMA system, and, in the TFCI hard spirit mode, TFCI bits are divided into head and tail portions and these divided TFCI bit portions are transmitted as two types of TFCIs. Although the TFCI hard spirit mode originally exists in order to simultaneously transmit the two types of TFCIs, one of them is used as the TFCI and the TPC command or signaling based on the TPC command is assigned to the other bit portion in this case. As a result, a similar signal can be also piggybacked onto the TFCI in addition to the TPC command being assigned to the other bit portion, and therefore the influence of errors on the TPC command can be further reduced as compared with the case in which only the TPC command is transmitted. In a case in which the third method is used together with the fourth method, it is desirable to increase the power-off set PO1 of the TFCI in order to improve the quality of the TFCI itself.

In step 1403 of Fig. 21, the terminal receives a signal associated with the CPICH transmitted from the base station. By measuring the receive level of the received signal associated with the CPICH, the terminal can recognize the communication quality of the downlink transmission line. In step 1404, the terminal searches for a cell having a good communication quality in the uplink transmission line which is estimated from the TPC command and having a communication quality in the downlink transmission line which is good enough to receive an ACK/NACK response signal, the communication quality being determined from the CPICH receive level. Because the following steps ST1405 to ST1408 are the same as the corresponding steps of the already-explained processing, the explanation of the steps will be omitted hereafter.

According to this embodiment, the terminal can select a cell which can prevents a link imbalance from occurring more effectively as compared with a case in which a cell is selected from only one of the downlink quality and the uplink quality. Therefore, the present embodiment offers an advantage of being able to improve the throughput, and being able to prevent radio resources from being wasted because an improper cell is selected.

### Embodiment 3.

In accordance with above-mentioned embodiment 2, the terminal determines the primary cell in consideration of both the communication quality of the uplink transmission line and the communication quality of the downlink transmission line, and transmits packet data to the base station according to scheduling information from the base station which has been determined to be the primary cell, as previously explained. A terminal of this embodiment which will be explained below selects an appropriate HARQ (Hybrid Automatic Repeat reQuest) method in order to ensure an optimal communication quality in the uplink transmission line, thereby improving the throughput, even though a link imbalance in which the communication quality of the uplink transmission line and the communication quality of the downlink transmission line become out of balance has occurred.

Hereafter, the HARQ method will be explained. The HARQ method is based on a technology for improving the communication quality of the uplink transmission line with a combination of the ARQ method and FEC (Forward Error Correction), and has an advantage of making error correction function effectively even for a transmission line in which the communication quality varies through retransmission processing. It is also possible to acquire a further-improved quality by combining the received results at the first transmission of data and the received results at retransmission of the data especially at the time of the retransmission. There is "Chase Combining" as an example of the HARQ method. In accordance with the Chase Combining, while the same data sequence is transmitted at the first transmission and at the retransmission, the gain is improved by combining the data sequence transmitted at the first transmission and the data sequence transmitted at the retransmission at the time of the retransmission. This method is based on an idea that the data which has been transmitted for the first time partially includes correct data even if the data has errors, and therefore the data can be transmitted with a high degree of accuracy by combining the partially-correct data which has been transmitted for the first time and the data to be retransmitted.

There is "IR (Incremental Redundancy)" as an example of the HARQ method. The IR method increases the redundancy. At the time of retransmission of data, the IR method increases the redundancy by transmitting a parity bit to combine it with the data which has been transmitted for the first time, thereby improving the quality with an error correction function. When there have occurred many errors, the correcting capability is further improved because the retransmission of data makes the redundancy be higher. Therefore, there can be a case in which the use of the IR method is more effective than the use of the Chase Combining method. However, in the case of the use of the IR method, it is necessary to achieve synchronization between the HARQ states of cells. When two cells are distant from each other, it is difficult for their schedulers to make contact with each other to get to know each other's current HARQ state. That is, when either one of the schedulers sends out ACK, the other scheduler of the other cell cannot know that ACK has been sent out to the terminal. When the terminal is in the SHO state, the use of the IR method requires many signalings because each base station needs to grasp the how manieth transmission the current transmission is.

As shown in Fig. 5 explained previously, in the state in which a single terminal is communicating with two or more base stations, a certain base station 101a may be unable to receive a transmit signal from the terminal 100 and may return NACK to the terminal 100, and another base station 101b may receive the transmit signal from the terminal 100 and may return ACK to the terminal 100. In such a case, the scheduler of the base station 101a waits for retransmission of the transmit signal from the terminal 100 while the base station 101b waits for transmission of the next packet data from the terminal 100. Because the base station control apparatus 102 must intervene between the base stations 101a and 101b when achieving synchronization between them, it takes much time to perform an exchange of signals via the base station control apparatus 102, and it also takes much time for the base station control apparatus 102 to carry out the processing, and this presents a problem that the throughput of the whole system decreases.

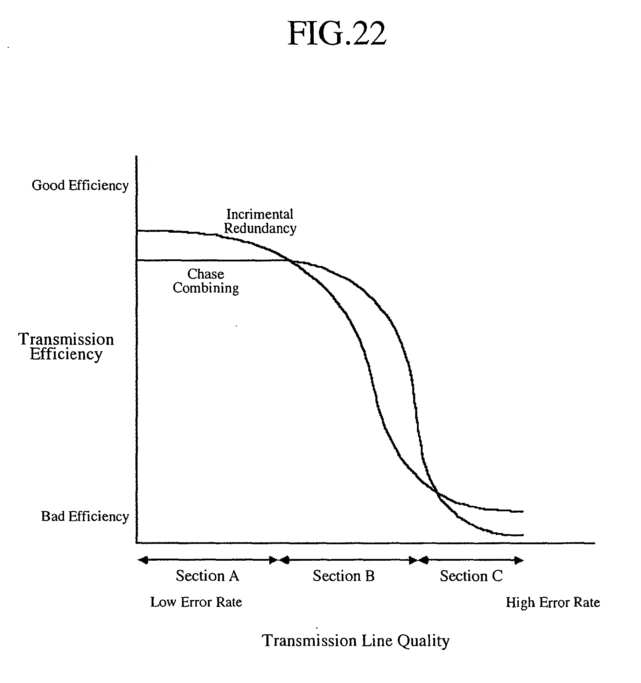

Fig. 22 is an explanatory diagram for explaining the characteristics of the Chase Combining and IR methods. In the graph shown in Fig. 22, the vertical axis shows the transmission efficiency and the horizontal axis shows the transmission line quality. This graph further shows that the farther along the vertical axis from the point of origin, the higher the transmission efficiency, and the farther along the horizontal axis from the point of origin the higher the error rate, that is, the worse the transmission line quality. In Fig. 22, in a case (section A) in which the transmission line quality is so good that almost of data can be transmitted properly at the time of the first transmission of the data, the use of the IR method is more efficient. This is because the IR method enables higher-speed transmission compared with the case of the use of the Chase Combining method because the IR method makes it possible to put many number of information bits on the IR. In contrast, in a case (section B) in which retransmission of the data is needed, the use of the Chase Combining method is more efficient. This is because the combining of the data which has been transmitted for the first time and the data to be retransmitted using the Chase Combining method exerts its effect. In a case (section C) in which the transmission line quality further worsens, the use of the IR method is more efficient. This is because the IR method further transmits a parity bit a number of times by retransmitting the data a number of times, thereby implementing a higher degree of redundancy, while in the case of using the Chase Combining method the amount of parity bits does not vary even if retransmission of the data is performed a number of times. That is, the IR method is effective for a case in which the line quality is good and high-speed data transmission is needed or a case in which the line quality is remarkably bad.

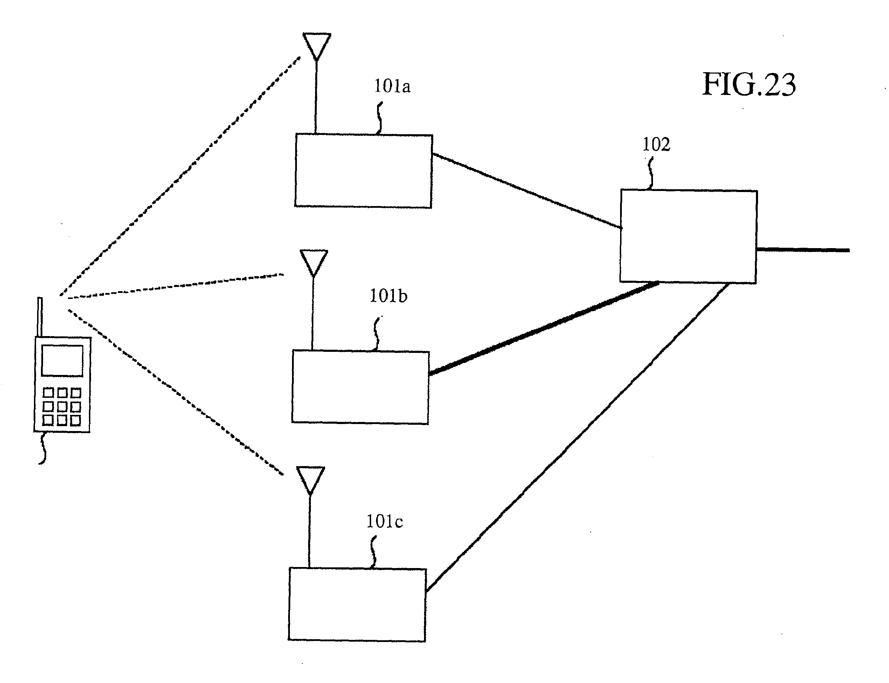

There is "macro selective combining" as an example of the HARQ method. In accordance with the macro selective combining, two or more base stations receive data transmitted form a terminal, and the base station control apparatus selects one of decoded results of the data obtained by the two or more base stations which indicates CRC OK. Fig. 23 is an explanatory diagram explaining a state in which the terminal is placed in an SHO state in which the terminal is communicating with the two or more base stations, and is carrying out the macro selective combining. In Fig. 23, in a case in which a base station 101b offers a decoded result which indicates CRC OK, the base station control apparatus 102 selects the base station 101b. As a result, even when the transmission line varies in its state, any one base station in a good reception state only has to succeed in receiving data from the terminal and high-reliability transmission can be carried out. In the example of Fig. 23, each of the base stations 101a and 101c which shows, as the CRC check result of the received data, occurrence of an error transmits NACK to the terminal 100, while the base station 101b which shows, as the CRC check result of the received data, OK transmits ACK to the terminal 100. However, when using this macro selective combining method, it is desirable to use the Chase Combining in the hybrid ARQ method. This is because if the data which has been transmitted for the first time is the same as that to be retransmitted, the data can be decoded at the time of the retransmission even though the data which has been transmitted for the first time cannot be received via a transmission line in which the communication quality always varies. As a result, the merit of the macro selective combining can be made to come into play. For uplink packets, the macro selective combining can be applied to either the case, as shown in Fig. 4, in which there is a one-to-one correspondence between a scheduler and a terminal, or the case, as shown in Fig. 5, in which there is a one-to-many correspondence between a scheduler and terminals.

Hereafter, a process of selecting an appropriate HARQ (Hybrid Automatic Repeat reQuest) method from among the Chase Combining method, IR method, and macro selective combining method according to the communication quality of the uplink transmission line between each of two or more base stations and the terminal, and the communication quality of the downlink transmission line between each of the two or more base stations and the terminal, and the structure of the terminal will be explained. For the sake of simplicity, the explanation will be made imagining two following cases for the communication quality of the uplink transmission line between the terminal and each of the two or more base stations, and the communication quality of the downlink transmission line between the terminal and each of the two or more base stations. First, a case in which "the communication quality of the transmission line with a certain one of the two or more cells is remarkably good compared with those with the other cells" is defined as case 1, and a case in which "the communication quality of the transmission line with each of the two or more cells is not good" is defined as case 2.

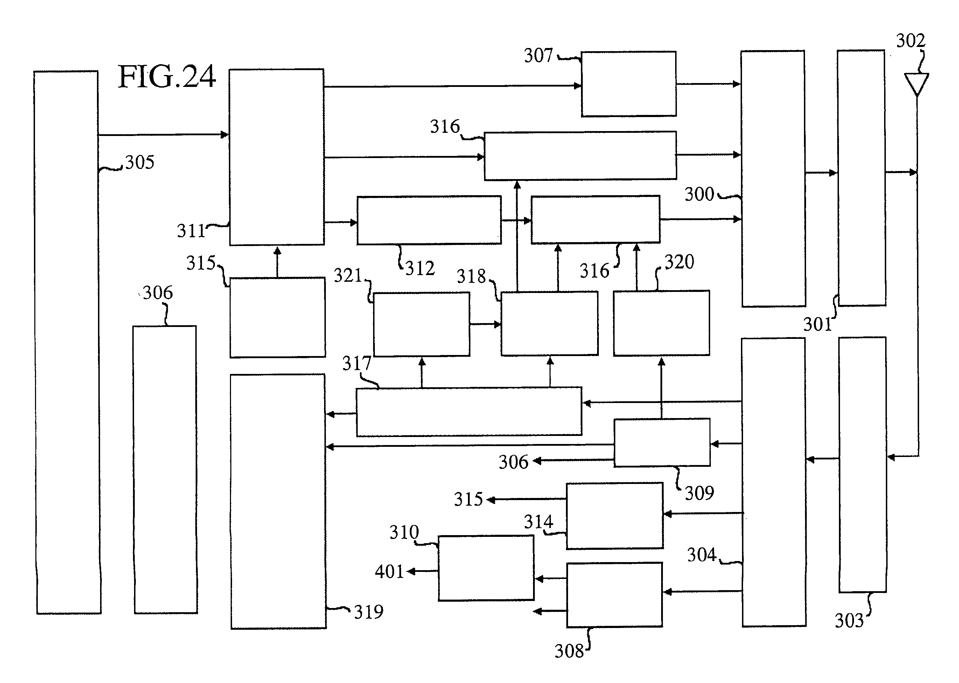

Fig. 24 is a block diagram showing the structure of the mobile communication terminal equipment according to embodiment 3 of the present invention. The mobile communication terminal equipment which will be explained below needs to have a function of switching among HARQ modes and to instruct a base station to carry out retransmission of data on the basis of the result of the determination of the primary cell. To this end, an HARQ switching unit 321 is disposed. The HARQ switching unit 321 instructs the retransmission control unit 318 to switch among the HARQ methods according to the determination result from the primary cell determination unit 319. In Fig. 24, the same reference numerals as shown in Fig. 15 denote the same components or like components, and therefore the explanation of the components will be omitted hereafter.

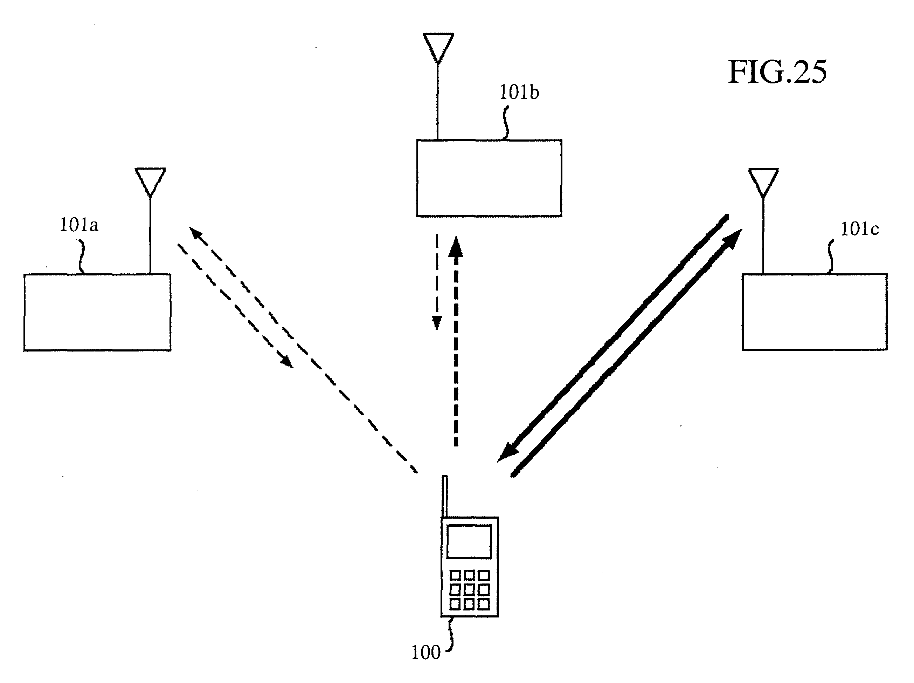

First, an explanation will be made as to the HARQ method selection process which the terminal carries out in case 1 in which "the communication quality of the transmission line with a certain one of the two or more cells is remarkably good compared with those with the other cells." Fig. 25 is an explanatory diagram showing the state of case 1. Fig. 25 shows that the terminal 100 is placed in an SHO state in which the terminal 100 is communicating with the base station 101a via a link 1, is communicating with the base station 101b via a link 2, and is communicating with the base station 101c via a link 3. Concretely, this figure shows that while each of link 1 and link 2 has a good communication quality in its uplink transmission line, but has a bad communication quality in its downlink transmission line, and link 3 has a good communication quality in both its uplink transmission line and its downlink transmission line. In the example of Fig. 25, while a so-called link imbalance in which the communication quality of the uplink transmission line and the communication quality of the downlink transmission line are out of balance has occurred in each of link 1 and link 2, no link imbalance has occurred in link 3. In such a case, the terminal 100 adopts not the macro selective combining method, but the IR method as the HARQ method. The terminal 100 then communicates with only the base station 101c via link 3 having the best communication quality. This is because the IR method provides a high degree of transmission efficiency in the case in which the best transmission line quality is good enough for the terminal to surely transmit data at the first transmission of the data, and the synchronization among the HARQ states of the cells which is a weak point of the IR method presents no problem if the party on the other end with which the terminal is communicating is limited to one base station. Furthermore, there is no problem with the fact that the macro selective combining method cannot be used if the terminal can communicate with the target base station certainly by using the IR method.

The terminal 100 recognizes the communication qualities of the uplink transmission lines with the two or more base stations, and those of the downlink transmission lines with the two or more base stations in order to determine the primary cell, as explained with reference to Fig. 17. Therefore, when performing step ST802, the terminal 100 can recognize a base station which has a remarkably-good communication quality from among the two or more cells and can select this base station as the primary cell. The terminal, in step ST803, notifies this base station that it has selected as the primary and uses the IR method as the HARQ method to this base station. The terminal then sets up the HARQ switching unit 321 shown in Fig. 24 so that it can communicate with the base station using the IR method. When receiving scheduling information from the base station which the terminal 100 has selected as the primary cell, the terminal 100, in step ST806, transmits packet data to the base station using the IR method.

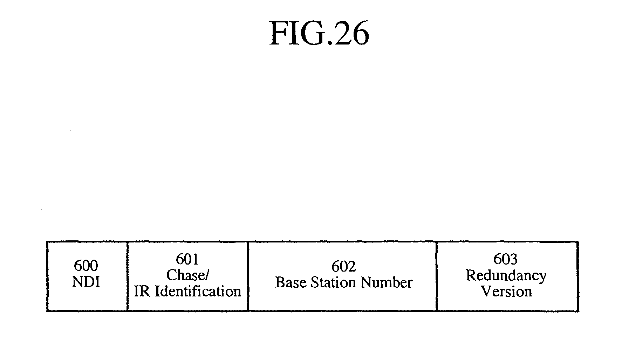

Fig. 26 shows the format of a signal which the terminal transmits in order to notify the HARQ method which it uses for data transmission to the base station which it has selected as the primary cell. In Fig. 26, an NDI (New Data Indicator) 600 is an identifier for enabling the base station to determine whether the transmission data is data which has been transmitted for the first time or data which has been retransmitted, a Chase/IR identifier 601 is an identifier for enabling the base station to recognize the HARQ mode which it uses for data transmission, a base station number 602 is an identifier for enabling the base station to recognize with which base station the terminal communicates when selecting the IR method as the HARQ mode, and a redundancy version 603 is an identifier for identifying an information bit and a parity bit in the IR. Because it is assumed in this case 1 that the number of times that retransmission of data is carried out is small, it is possible to reduce the number of bits of the redundancy version. For example, if the number of times that transmission of data is carried out is limited to 2 times, one bit for distinguishing between first-time transmission and second-time transmission has only to be provided.

As previously explained, in case 1, the terminal can efficiently transmit information bits to a base station having a communication quality in the transmission line which is good enough for the terminal to transmit data almost certainly when transmitting the data to the base station for the first time by transmitting the data to the base station using the IR method. Particularly, the effect is enhanced when the terminal communicates with the base station via the uplink transmission line at a high rate.

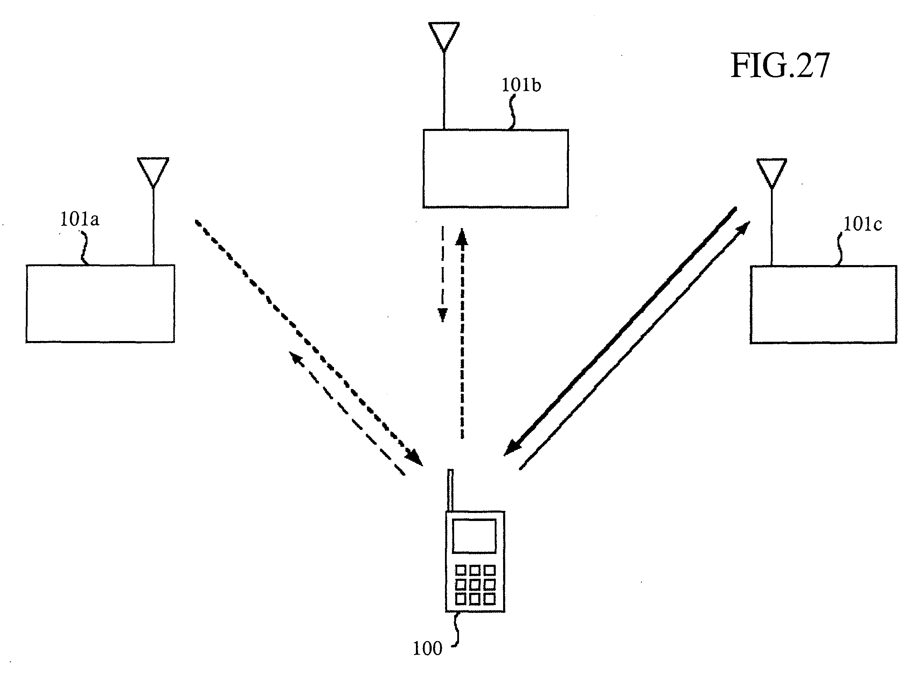

Next, an explanation will be made as to the HARQ method selection process which the terminal carries out in case 2 in which the communication quality of the transmission line with each of the two or more cells is not good. Fig. 27 is an explanatory diagram showing the state of case 2. Fig. 27 shows that the terminal 100 is placed in an SHO state in which the terminal 100 is communicating with the base station 101a via a link 1, is communicating with the base station 101b via a link 2, and is communicating with the base station 101c via a link 3. Concretely, this figure shows that while each of link 1 and link 3 has a bad communication quality in its uplink transmission line, but has a good communication quality in its downlink transmission line, and link 2 has a good communication quality in its uplink transmission line, but has a bad communication quality in its downlink transmission line. In the example of Fig. 27, the case in which the communication quality of each of links 1 to 3 is not good considering that a so-called link imbalance in which the communication quality of the uplink transmission line and the communication quality of the downlink transmission line are out of balance has occurred in each of link 1, link 2, and link 3 is shown. Thus, in the case in which the communication qualities of links 1 to 3 are all bad, the Chase Combining method which causes a lack of the redundancy is unsuitable. Furthermore, the macro selective combining method is not effective in the case in which the communication qualities of all the links are bad. When the terminal has received NACK as a result of carrying out data transmission using the Chase Combining method in such a situation, the terminal can estimate that while the communication quality of the uplink transmission line is bad, the communication quality of the downlink transmission line is good. Thus, there is a possibility that in the case in which the communication quality of the uplink transmission line is bad, the terminal succeeds in transmitting data to the base station by changing the HARQ method from the Chase Combining method which causes a lack of the redundancy to the IR method.

It can be considered that either the terminal or the base station control apparatus grasps that the macro selective combining does not produce an effect and then makes a judgment on whether to switch to the IR method in such a situation as represented by case 2. The terminal can determine whether the macro selective combining properly functions on the basis of a response signal transmitted from each of the two or more base stations. For example, when receiving NACK from a base station, the terminal can determine that the base station is lacking in the correction capability even though the base station has carried out a reception process, and this results in occurrence of an error. Furthermore, the terminal can determine that the communication quality of the downlink transmission line is good because it has received NACK from the base station. In contrast, as a case of receiving no response signal from the base station, there can be two cases: a case in which the communication quality of the uplink transmission line is remarkably bad and the transmit signal from the terminal has not reached the base station; and a case in which the communication quality of the downlink transmission line is remarkably bad, and the response signal from the base station has not reached the terminal. In either case, because it is not proper to select, as the primary cell, a base station from which the response signal does not reach the terminal, the terminal transmits data associated with the E-DCH to a base station from which it has received NACK. There is a high possibility that at that time, the terminal succeeds in transmitting the data to the base station by using the IR method.

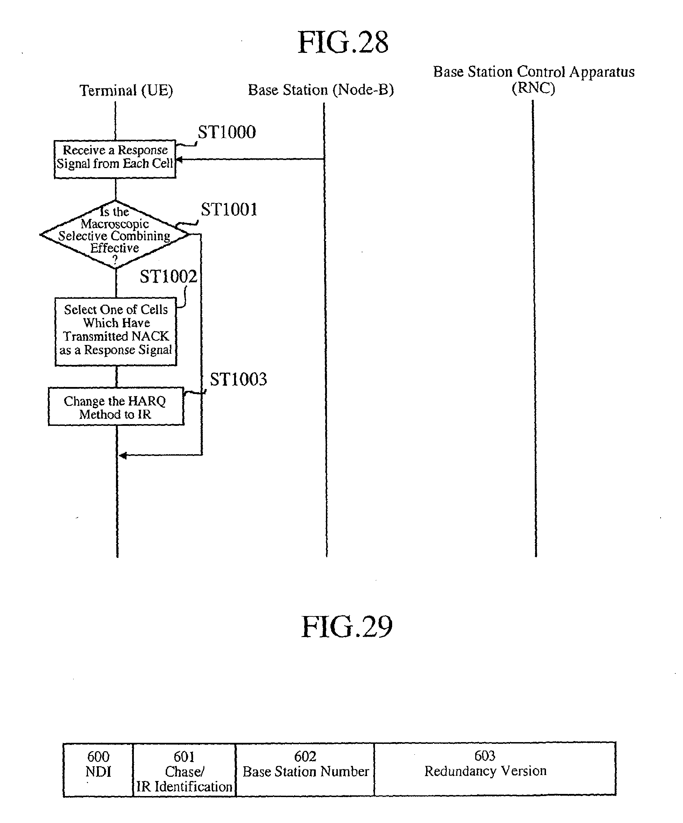

Fig. 28 is a flow chart for explaining the process of changing the HARQ method from the macro selective combining method to the IR method which is carried out by the terminal. In step ST1000, the terminal shown in Fig. 15 receives the response signals (ACK/NACK) notified from the two or more receivable base stations using the response signal receiving unit 317. The terminal then, in step ST1001, determines whether the macro selective combining is properly functioning in the primary cell determination unit 319 on the basis of the response signals from the two or more base stations which the response signal receiving unit 317 has received. For example, when there is no base station which has notified, as the response signal, ACK to the terminal, the primary cell determination unit 319 determines that the macro selective combining is not functioning properly, and then carries out a process of step ST1002. In contrast, when there exists a base station which has notified, as the response signal, ACK to the terminal, the primary cell determination unit determines that the macro selective combining is functioning properly and therefore there is no necessity to change the HARQ method to the IR method, and ends the processing.

In performing step ST1002, when there is no base station which has notified, as the response signal, ACK to the terminal, the primary cell determination unit 319 of the terminal selects, as the primary cell, one of the two or more base stations which has notified, as the response signal, NACK to the terminal. The terminal can estimate that each base station which has notified NACK to the terminal does not have a good communication quality in the uplink transmission line, but has a communication quality which is good enough for a certain signal to reach each base station, and the communication quality of the downlink transmission line is good enough for the terminal to receive at least NACK. The terminal then, in step ST1003, determines to use the IR method as the HARQ method in order to increase the redundancy of the transmit signal to achieve success in communications via the uplink transmission line, and notifies the base station that it will use the IR method. The terminal then transmits data associated with the E-DCH to the base station using the IR method. When the terminal determines to switch to the IR method, it is desirable to incorporate, as a part of the redundancy version (RV information), information indicating that the terminal will use the IR method in order that the terminal can notify it directly to the base station. The redundancy version indicates what type of parity is contained in a case in which data which has been transmitted for the first time differs from data to be retransmitted and in a case in which retransmission is carried out a number of times and how a parity (what version of parity) is contained differs for each retransmission.

Fig. 29 shows the format of a signal which the terminal transmits to a base station in such a situation as represented by case 2 to notify the base station that the terminal will use the IR mode. In Fig. 29, because it is assumed that in case 2 retransmission is carried out a many number of times, the redundancy version 603 has many ways of containing a parity. In the figure, the same reference numerals as shown in Fig. 26 denote the same elements or like elements, and therefore the explanation of the elements will be omitted hereafter. For example, 2-bit information is needed, as the redundancy version, in a case in which up to four times of transmission is allowed, and 3-bit information is needed, as the redundancy version, in a case in which up to eight times of transmission is allowed.

In a case in which the base station control apparatus grasps that the macro selective combining does not produce any effect and then makes a judgment on whether to switch to the IR method, the base station control apparatus compares reception results notified thereto from the base stations (or CRC results notified there from the cells) with one another, and then determines whether or not the macro selective combining is functioning properly. When then determining that the macro selective combining is not functioning properly, the base station control apparatus selects a base station which has transmitted NACK thereto from among the two or more base stations, and determines to use the IR method as the HARQ method. The base station control apparatus then notifies the terminal that it has selected the base station as the primary cell, and also notifies the HARQ method which it will use (in this case, the IR method) to the terminal. However, in the case in which the base station control apparatus carries out the above-mentioned processing, it takes much time to carry out signaling of the switching to the IR method to the terminal. When determining to switch to the IR method on the basis of a CRC result from each base station, the base station control apparatus instructs the terminal to use the IR method by carrying out RRC signaling.

As mentioned above, this embodiment 3 is characterized in that in case 2 the redundancy is increased and error correction is then carried out when the quality of the transmission line is not good. Furthermore, in a case of using the Chase Combining method, this embodiment 3 produces an effect when the redundancy lacks.

### Embodiment 4.

In above-mentioned embodiments 1 and 2, a base station or a terminal determine the primary cell in consideration of the communication quality of the uplink transmission line and the communication quality of the downlink transmission line in order to prevent decrease in the throughput due to a link imbalance. However, the above-mentioned embodiments are based on the premise that there is a demand to transmit a large volume of data at a high speed via the uplink transmission line, and the communication quality of the uplink transmission line is good enough to transmit a large volume of data at a high speed. There can be provided an idea of giving higher priority to the communication quality of the uplink transmission line when determining the primary cell. In this embodiment, a base station which determines the primary cell according to the communication quality of the uplink transmission line will be explained. This method offers an advantage of being able to follow high-speed change in the state of the uplink transmission line because a base station which can measure the quality of the uplink signal makes a cell determination.

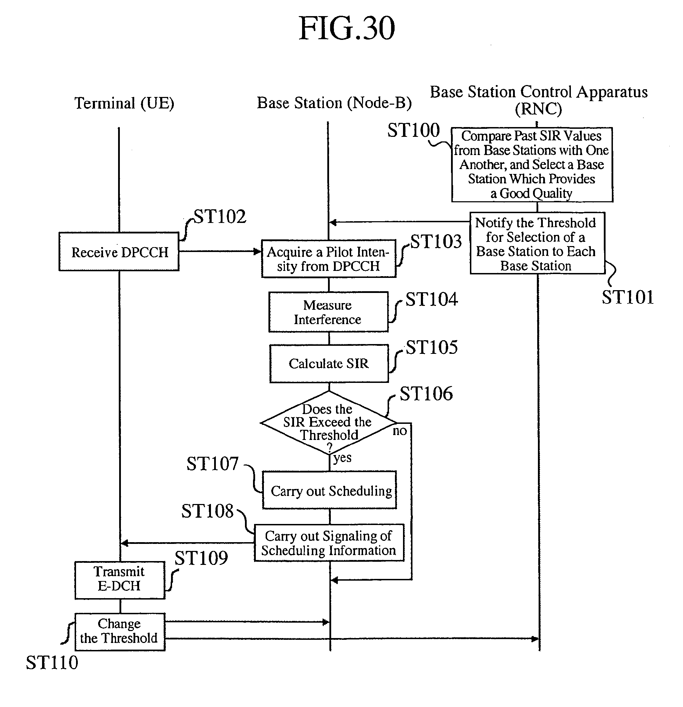

Fig. 30 is a flow chart showing a process of determining the primary cell on the basis of the communication quality of the uplink transmission line which is carried out by a base station. In step ST100, the base station control apparatus compares past SIR values which have been notified thereto from base stations, and determines a threshold which is used as reference of the determination of the primary cell. At that time, the threshold is determined so that at least one base station will be made to carry out scheduling. In step ST101, the base station control apparatus notifies the threshold used for the primary cell determination to each base station. Each base station which has received the threshold notified thereto from the base station control apparatus stores the threshold in a threshold receiving unit 421. When the communication quality of the uplink transmission line from the terminal to each base station is better than this threshold, each base station carries out the primary cell determination process (1 to 1 type) and the scheduling (one-to-many type). The terminal then, in step ST102, transmits a signal associated with a DPCCH to each base station using a DPCH transmitting unit 307. Each base station which has received the signal associated with the DPCCH transmitted from the terminal, in step ST103, measures a pilot intensity from the received signal associated with the DPCCH. Each base station then, in step ST104, measures interference using an interference amount measuring unit 419, and, in step ST105, calculates an SIR using an SIR calculating unit 409. This SIR is used as a parameter indicating the communication quality of the uplink transmission line from the terminal to each base station. In step ST106, each base station judges whether the communication quality of the uplink transmission line exceeds a predetermined level on the basis of the SIR and the threshold using a schedule grant judgment unit 421.

When, in step ST106, determining that the communication quality of the uplink transmission line indicated by the SIR exceeds the threshold, each base station, in step ST107, carries out the scheduling, and then, in step 108, notifies scheduling information about the scheduling to the terminal. The terminal which has received the scheduling information from each base station, in step ST109, transmits a signal associated with the E-DCH to each base station via a E-DCH transmitting unit on the basis of the scheduling result. This method has the drawback of being finally unable to recognize the number of base stations which carry out the scheduling because the state of the transmission line varies from moment to moment. To overcome the drawback, signaling for increasing or decreasing the threshold is prepared so that the terminal can instruct each base station to increase or decrease the threshold. The signaling can be notified directly to each base station, or the instruction can be notified to the base station control apparatus using signaling which is called RRC. The terminal then, in step ST110, changes the threshold using a primary cell determination unit 319 if necessary. The terminal can notify the changed threshold directly to each base station using a E-DPCCH transmitting unit 307, or can notify, as RRC signaling, it to the base station control apparatus using the DPCH transmitting unit 305. Although RRC signaling can be alternatively used as the method of signaling the threshold, it takes much time to notify the threshold to each base station because the threshold is notified to each base station via the base station control apparatus. It is therefore desirable to issue the instruction for increasing or decreasing the threshold with physical-layer signaling in order to enable each base station to change the threshold at a higher speed. As a result, the terminal can reduce the number of cells which carry out the scheduling superfluously by increasing the threshold, and can increase the number of cells which carry out the scheduling by decreasing the threshold.

As can be seen from the above-mentioned explanation, a base station which takes charge of the scheduling appropriately when carrying out the scheduling can be selected on the basis of the communication quality of the uplink transmission line. In the case in which the threshold is provided for each base station, the terminal makes it possible to carry out high-speed cell determination which reflects the communication quality of the uplink transmission line, while corresponding to the varying transmission line quality, thereby improving the throughput in the uplink transmission line. Particularly, in the case in which the terminal changes the threshold of each base station with physical-layer signaling, unnecessary scheduling which the terminal does not use can be suppressed, and the radio resources can be saved.

### Industrial Applicability

The present invention can be applied to mobile phone terminals and base stations which support uplink packet communications.

## Claims

1. A base station which performs a scheduling process of allocating a radio resource to a mobile station according to a radio resource allocation request for allocation of the radio resource which is transmitted from said mobile station via a radio uplink, and which notifies a result of this scheduling process to said mobile station via a radio downlink, **characterized in that** said base station comprises:
a radio uplink state estimation unit for receiving a signal transmitted from said mobile station to estimate a state of said radio uplink;
a radio downlink state information receiving unit for receiving state information indicating a state of the radio downlink measured by said mobile station; and
a scheduling grant judgment unit for permitting said base station to carry out scheduling for said mobile station when this radio downlink state information receiving unit has received said state information and the state of said radio uplink which said radio uplink state estimation unit has estimated satisfies a predetermined scheduling grant condition.

2. The base station according to claim 1, **characterized in that** the radio downlink state information receiving unit receives, as the state information, a receive level of the radio downlink which is measured by the mobile station and is transmitted thereto via the radio uplink.

3. The base station according to claim 1, **characterized in that** the radio downlink state information receiving unit receives, as the state information, a coefficient which is set up according to the state of the radio downlink.

4. The base station according to claim 1, **characterized in that** the radio downlink state information receiving unit receives, as the state information, a control instruction for controlling the scheduling grant condition according to the state of the radio downlink.

5. The base station according to claim 1, **characterized in that** the scheduling grant judgment unit corrects for a radio uplink state estimation result which the radio uplink state estimation unit has obtained by estimating the state of the radio uplink according to the state information which the radio downlink state information receiving unit has received.

6. The base station according to claim 1, **characterized in that** the scheduling grant judgment unit changes the scheduling grant condition according to the state information which the radio downlink state information receiving unit has received.

7. The base station according to claim 2, **characterized in that** the radio downlink state information receiving unit receives a signal including at least an identifier for identifying the base station which is a destination and information indicating a transmission line quality of the radio downlink, the signal being generated by the mobile station.

8. The base station according to claim 3, **characterized in that** the radio downlink state information receiving unit receives a signal including at least an identifier for identifying the base station which is a destination and coefficient information which is set up according to the state of the radio downlink, the signal being generated by the mobile station.

9. The base station according to claim 4, **characterized in that** the radio downlink state information receiving unit receives a signal including at least an identifier for identifying the base station which is a destination and a control instruction which is set up according to the state of the radio downlink, the signal being generated by the mobile station.

10. Mobile communication terminal equipment which notifies a scheduling request signal for making a request for allocation of a radio resource to a base station via an uplink transmission line when carrying out data transmission, and which carries out transmission of data to said base station according to a scheduling result obtained by said base station notified via a downlink transmission line, **characterized in that** said terminal equipment comprises:
a radio downlink state estimation unit for receiving a signal transmitted from at least said base station to estimate a state of said radio downlink;
a radio uplink state information receiving unit for receiving state information indicating a state of the radio uplink measured by at least said base station;
a cell selecting unit for selecting said base station from which said radio uplink state information receiving unit had received said state information, and for which the state of said radio downlink satisfies a predetermined condition; and
a transmitting unit for transmitting said scheduling request signal to said base station selected by said cell selecting unit.

11. The mobile communication terminal equipment according to claim 10, **characterized in that** the radio uplink state information receiving unit receives, as the state information, a receive level of the radio uplink which is measured by the base station and is transmitted thereto via the radio downlink.

12. The mobile communication terminal equipment according to claim 10, **characterized in that** the radio uplink state information receiving unit receives, as the state information, a coefficient which is set up according to the state of the radio uplink.

13. The mobile communication terminal equipment according to claim 10, **characterized in that** the radio uplink state information receiving unit receives, as the state information, a control instruction for controlling the condition, on which said cell selecting unit selects the base station, according to the state of the radio uplink.

14. The mobile communication terminal equipment according to claim 10, **characterized in that** the cell selecting unit corrects for a radio downlink state estimation result (or SIR) which the radio downlink state estimation unit has obtained by estimating the state of the radio uplink according to the state information which the radio uplink state information receiving unit has received.

15. The mobile communication terminal equipment according to claim 10, **characterized in that** the cell selecting unit changes the condition, on which said cell selecting unit selects the base station, according to the state information which the radio uplink state information receiving unit has received.

16. The mobile communication terminal equipment according to claim 11, **characterized in that** the radio uplink state information receiving unit receives a state information notification signal generated by the base station, including information indicating at least a transmission line quality of the radio uplink.

17. The mobile communication terminal equipment according to claim 11, **characterized in that** the radio uplink state information receiving unit receives a state information notification signal generated by the base station, including at least coefficient information on a coefficient which is set up according to the state of the radio uplink.

18. The mobile communication terminal equipment according to claim 11, **characterized in that** the radio uplink state information receiving unit receives a signal generated by the base station, including at least a control instruction which is set up according to the state of the radio uplink.

19. The mobile communication terminal equipment according to any of claims 16 to 18, **characterized in that** the state information notification signal further includes an identifier for identifying the mobile communication terminal equipment which is a destination when transmitted via a common channel among channels which construct the radio downlink.

20. The mobile communication terminal equipment according to claim 10, **characterized in that** in a case in which the cell selecting unit selects two or more base stations, the transmitting unit switches between data retransmission methods selectively according to the state of the radio uplink and the state of the radio downlink of each of said two or more base stations.

21. The mobile communication terminal equipment according to claim 10, **characterized in that** the radio uplink state information receiving unit receives, as the state information, a transmit-power-control instruction which is set up by the base station according to the state of the radio uplink.

22. The mobile communication terminal equipment according to claim 21, **characterized in that** the radio uplink state information receiving unit filters the transmit-power-control instruction which it has received from the base station in order to prevent a reception error from occurring in the transmit-power-control instruction.

23. The mobile communication terminal equipment according to claim 21, **characterized in that** the radio uplink state information receiving unit performs an averaging process on the transmit-power-control instruction which it has received from the base station in order to prevent a reception error from occurring in the transmit-power-control instruction.

24. The mobile communication terminal equipment according to claim 21, **characterized in that** an offset which is a parameter to increase a transmission power is added to the transmit-power-control instruction by the base station which is instructed to add a large-scale channel by a base station control apparatus when carrying out uplink high-speed communications.

25. The mobile communication terminal equipment according to claim 24, **characterized in that** the offset is added to the transmit-power-control instruction by the base station in a case in which the transmit-power-control instruction is an instruction for instructing the terminal which is a transmission destination to reduce the transmission power.

26. A primary cell determination method **characterized in that** said method comprises:
a radio uplink state estimation step of receiving a signal transmitted from a mobile station to estimate a state of a radio uplink from said mobile station to a base station;
a radio downlink state information transmission step of receiving a signal transmitted from said base station, and for transmitting state information indicating a state of a radio downlink from said base station to said mobile station from said mobile station to said base station;
a scheduling grant judgment step of determining whether the state information on the state of said radio downlink transmitted in said radio downlink state information transmission step and the state of said radio uplink estimated in said radio uplink state estimation step satisfy a predetermined scheduling grant condition, and of, when said schedule grant condition is satisfied, permitting a scheduling process of allocating a radio resource to said mobile station;
a scheduling result notification step of carrying out scheduling for said mobile station for which the scheduling process is permitted in the scheduling grant judgment step, and of notifying a scheduling result to said mobile station; and
a data transmission step of said mobile station which has received the scheduling result determining, as a primary cell, said base station and transmitting data to said base station.

27. The primary cell determination method according to claim 26, **characterized in that** the radio downlink state information transmission step includes a step of measuring a receive level of the radio downlink from the base station, a step of selecting said base station on a basis of the measured receive level, and a step of transmitting, as the state information, said receive level to said selected base station.

28. The primary cell determination method according to claim 26, **characterized in that** the radio downlink state information transmission step includes a step of measuring a receive level of the radio downlink from the base station, a step of, when receiving signals from said two or more base stations, defining, as a first base station, one of said two or more base stations having a highest receive level and, as a second base station, one of said two or more base stations having a lowest receive level, to set up coefficients for the first and second base stations, respectively, a step of assigning a coefficient to a receive level of a third base station other than said first and second base stations among said two or more base stations on a basis of the receive levels of said first and second base stations, and a step of transmitting, as the state information, the coefficients set up for said first base station, said second base station, and said third base station, respectively.

29. The primary cell determination method according to claim 28, **characterized in that** in the scheduling grant judgment step, a radio uplink state estimation result which is estimated in the radio uplink state estimation step is corrected for on a basis of the coefficients which are the state information transmitted from the mobile station to the base station in the radio downlink state information transmission step.

30. The primary cell determination method according to claim 26, **characterized in that** the radio downlink state information transmission step includes a receive level measuring step of measuring a receive level of the radio downlink from the base station, and a monitoring step of monitoring whether or not the scheduling result is notified from the base station, and an instruction for controlling the scheduling grant condition is transmitted to the base station according to results of said receive level measuring step and said monitoring step.

31. A primary cell determination method **characterized in that** said method comprises:
a radio downlink state estimation step of receiving a signal transmitted from a base station to estimate a state of a radio downlink from said base station to a mobile station;
a radio uplink state information transmission step of receiving a signal transmitted from said mobile station, and transmitting state information indicating a state of a radio uplink from said mobile station to said base station from said base station to said mobile station;
a cell selecting step of selecting said base station which is associated with the state information on the state of said radio uplink transmitted in said radio uplink state information transmission step, and for which the state of said radio downlink estimated in said radio downlink state estimation step satisfies a predetermined condition;
a transmission step of transmitting a scheduling request signal to said base station selected in said cell selecting step; and
a data transmission step of said mobile station which has received a scheduling result determining, as a primary cell, said base station, and transmitting data to said base station.
